# FASCICULE DE BREVET EUROPEEN

(11) **EP 0 521 792 B1**
(45) Date de publication et mention de la délivrance du brevet: **06.09.1995**
(21) Numéro de dépôt: 92401899.7
(22) Date de dépôt: 02.07.1992
(51) Int. Cl.: B64C 27/33, B64C 27/32

(54) **Tête de rotor de giravion, rigide en traînée et articulée en pas et battement**
Rotorkopf eines Drehflügelflugzeuges, ohne Schwenkgelenke und mit Blattverstell- und Schlaggelenken
Rotary wing aircraft rotor head, rigid in drag and articulated in pitch and flapping

(30) Priorité: 03.07.1991 FR 9108323
(43) Date de publication de la demande: 07.01.1993
(73) Titulaire: AEROSPATIALE Société Nationale Industrielle, 75781 Paris Cédex 16 (FR)
(72) Inventeur: Bietenhader, Claude, F-13410 Lambesc (FR); Suzzi, Robert Jean, F-13005 Marseille (FR)
(74) Mandataire: Phélip, Bruno

(56) Documents cités:
- EP-A- 0 089 793
- FR-A- 1 559 400
- FR-A- 2 377 324
- GB-A- 1 190 259
- GB-A- 2 036 677

## Description

La présente invention se rapporte aux têtes de rotors de giravion. Elle concerne plus particulièrement des têtes de rotors, du type rigide en traînée, qui comportent un nombre pair de pales, qui peuvent être appliquées notamment aux têtes de rotors d'hélicoptères, et plus particulièrement aux têtes de rotors arrière d'hélicoptères assurant sur ce type de giravion la fonction anticouple et la commande de l'appareil en lacet.

Des exemples de têtes de rotors de giravion ayant un nombre pair de pales, et dont deux pales diamétralement opposées sont raccordées l'une à l'autre part un dispositif de liaison, sont décrits dans les brevets français n°2.443.382, 2.362.754, 2.377.324 et 2.441.541.

Le brevet français n°2.443.382, décrit une tête de rotor d'hélicoptère ayant un nombre pair de pales et comportant un corps de moyeu sur lequel les pales sont par paire et de façon diamétralement opposée montées mobiles en rotation par l'intermédiaire d'articulations et dans laquelle pour chaque paire de pales il est prévu un raccordement rigide à la traction mais élastique à la torsion et à la flexion de battement, entre les pieds desdites pales, ce raccordement étant sans aucune liaison avec le moyeu du rotor. Les deux pales diamétralement opposées sont reliées par une lame double qui traverse le moyeu sans y être fixée. Chaque pale comporte un manchon de commande de pas, qui s'appuie sur le moyeu par un palier à rotules de manière à permettre, selon ce document, une totale liberté de mouvements en torsion et en flexion entre les raccords de fixation des pales opposées. Chacun de ces paliers à rotules, tel qu'il est disposé dans ce brevet, ne peut absolument pas participer, même faiblement, à la reprise des efforts centrifuges. Dans cette conception, l'inconvénient majeur consiste en ce que, si pour une raison quelconque, la force centrifuge entre deux pales diamétralement opposées n'est plus la même, le palier à rotules est incapable d'encaisser la différence, et l'ensemble du système devient alors instable et peut conduire à une explosion du rotor.

Dans le brevet n°2.362.754, les pales diamétralement opposées de chaque paire de pales sont reliées entre elles par deux tirants parallèles en matériau composite. Ces tirants transmettent la force centrifuge d'une pale à la pale opposée sans intéresser le corps de moyeu. De plus dans leur torsion, ces tirants autorisent les variations de pas sur les pales. A chacune de leurs extrémités, ils sont reliés au corps de moyeu par un palier qui autorise les mouvements angulaires de pas, mais qui autorise également les mouvements de battement et de traînée. L'un des deux paliers autorise de plus un mouvement axial des tirants par rapport au corps de moyeu. L'autre palier, non mobile axialement, ne transmet donc au corps de moyeu que la différence de force centrifuge entre les deux pales. Ce dispositif concerne donc un moyeu rigide en traînée, dans lequel les mouvements angulaires de traînée ne sont autorisés que par l'allongement différentiel des deux tirants. Dans cette conception, la force centrifuge passe intégralement dans les tirants, puisque l'un des deux paliers de fixation d'un couple de pales sur le corps de moyeu est libre dans le sens axial des tirants.

Dans le brevet N° 2.377.324, deux pales diamétralement opposées sont reliées par un tirant en forme de barre plate, qui est un élément de construction intégral avec la structure de chacune de ces pales diamétralement opposées. Ce dispositif de tirant prend appui sur le corps de moyeu dans sa partie externe par un palier appelé "palier d'angle de pas", qui permet les variations de pas et de battement des pales. Ces paliers peuvent ou non, à la demande, transmettre tout ou partie des forces centrifuges en provenance de la pale dans le corps de moyeu. Dans le cas où il n'est pas nécessaire de transmettre ces forces par les paliers, il suffit de donner à ces paliers un certain jeu axial. Il convient alors de constituer, par l'intermédiaire de la barre reliant les pales, un appui central dans le moyeu pour, selon ce document, retrouver une stabilité axiale pour le balourd et les vibrations. Il faut noter que le système de liaison entre les pales consiste seulement en une barre plate, et qu'en conséquence, le dispositif n'est pas très rigide en traînée, d'autant plus que la barre est plate dans le plan perpendiculaire au plan du rotor. Il semble donc difficile qu'avec un tel système de moyeu, on puisse avoir une fréquence propre de traînée de la pale en rotation qui soit convenable par rapport à la vitesse de rotation. De plus, la barre de jonction est plate et de construction intégrale avec les pales, ce qui pose des problèmes de fabrication de cet ensemble et entraînera de grandes difficultés de maintenance, lorsqu'il sera nécessaire d'effectuer le changement des pales. Enfin, si l'on examine la position de la partie flexible en battement de la barre reliant les deux pales par rapport à l'axe de battement de la pale, cet axe de battement étant défini comme l'axe perpendiculaire à l'axe longitudinal de la pale, situé dans le plan de rotation du rotor et passant par le centre de l'articulation de battement, on voit qu'au droit de la rotule faisant office de centre d'articulation en battement, la barre flexible en battement est pratiquement encastrée sur l'emplanture de la pale, de sorte que les contraintes de flexion dynamique de battement dans la barre sont maximales au droit de cet encastrement et sont donc situées à un niveau très élevé.

Dans le brevet n° 2.441.541, les pales opposées de chaque paire sont reliées entre elles par un organe de liaison allongé torsible mais rigide suivant son axe longitudinal et qui est articulé en battement à chacune de ses extrémités. Cet organe traverse le corps de moyeu sans y être fixé. De plus, deux lames sensiblement parallèles disposées de part et d'autre de l'organe de liaison relient les pales au moyeu. Ces lames plates sont flexibles en torsion et en flexion de battement. Leur rigidité de traction est inférieure à celle de l'organe central de liaison. Ce rotor qui ne comporte pas d'articulation, a des lames flexibles en battement et torsibles en pas qui sont fixées au corps de moyeu. Elles transmettent donc au moyeu les efforts tranchants de battement et de traînée. De plus, la rigidité de traction est partagée entre les lames et l'organe de liaison, de telle sorte que la plus grande partie des efforts centrifuges est transmise d'une pale à l'autre par cet organe de liaison central, du fait que le module de cet organe est supérieur à celui des lames.

Le but de la présente invention est de remédier aux différents inconvénients décrits ci-dessus, et de proposer une architecture de tête de rotor de giravion ayant un nombre pair de pales, qui sont disposées par groupe de deux pales diamétralement opposées l'une par rapport à l'autre, et reliées l'une à l'autre par un système de raccordement sans aucune liaison avec le moyeu du rotor, de manière que ce système de raccordement ne transmette qu'une partie des efforts centrifuges provenant de chaque pale à la pale diamétralement opposée.

Dans cette nouvelle tête de rotor de giravion selon l'invention, chaque pale est d'une part retenue à l'encontre d'une partie de la force centrifuge, et d'autre part articulée en battement, traînée et pas sur le pourtour de la partie centrale et rigide du corps de moyeu. L'articulation de chaque pale sur le corps de moyeu est constituée par une unique butée sphérique lamifiée comprenant entre deux armatures interne et externe rigides, un empilement alterné en forme de portion de sphère de calottes sphériques rigides et de lames en matériau élastique, laquelle butée lamifiée sphérique est solidarisée d'une part par son armature interne à l'extrémité interne par rapport à l'axe rotor d'un manchon creux dont l'autre extrémité est solidarisée au pied de la pale, ledit manchon comportant latéralement un levier d'introduction de la commande en pas de la pale, et d'autre part par son armature externe à la périphérie du corps de moyeu creux sur laquelle ladite butée s'appuie. La butée lamifiée sphérique transmet en compression une partie des efforts centrifuges de la pale sur le corps de moyeu, et autoriser les oscillations angulaires de la pale en battement, en traînée et en pas.

De plus, dans le type de structure de tête de rotor de giravion, deux pales diamétralement opposées sont retenues l'une à l'autre, et à l'encontre d'une partie de la force centrifuge qui s'exerce sur elles, par un système de raccordement constitué par deux tirants parallèles disposés de part et d'autre de l'axe longitudinal de changement de pas commun aux deux pales et sans aucune liaison avec le corps de moyeu.

Suivant l'invention, chaque pale est articulée en battement et en pas sur le corps de moyeu par l'intermédiaire d'un manchon. Ce manchon est disposé entre l'emplanture de la pale et le corps de moyeu, et il s'appuie sur la périphérie de ce corps de moyeu par l'intermédiaire d'une butée sphérique lamifiée.

Les manchons diamétralement opposés sont raccordés entre eux par deux tirants identiques, disposés parallèlement au plan du rotor et sensiblement écartés de part et d'autre de l'axe longitudinal commun des deux pales diamétralement opposées, chaque extrémité desdits tirants comportant un alésage d'axe sensiblement parallèle à l'axe rotor pour sa solidarisation à l'intérieur du manchon correspondant par l'intermédiaire d'un boulon traversant deux alésages en concordance ménagés dans ledit manchon.

Les plans de chaque groupe de deux tirants sont disposés parallèlement entre eux avec un léger décalage suivant l'axe du rotor d'une valeur suffisante pour permettre le libre débattement des tirants lors de leur flexion et de leur torsion pour suivre les battements et les changements de pas des pales, ce décalage étant obtenu par un décalage correspondant de la position parallèlement à l'axe du rotor, des butées sphériques lamifiées correspondant à chaque groupe de deux tirants sur le corps de moyeu .

La matière des tirants et le dimensionnement de leur section sont choisis pour que lesdits tirants soient peu déformables en traction suivant leur axe longitudinal et souples en flexion dans le plan perpendiculaire au plan du rotor ainsi qu'en torsion suivant leur propre axe longitudinal pour suivre les mouvements de chaque pale en battement et en pas, mais relativement rigides en traction pour, d'une part, transmettre à la pale opposée une fraction de la force centrifuge s'exerçant sur chaque pied de pale et, d'autre part, s'opposer aux oscillations angulaires de la pale en traînée, c'est-à-dire dans le plan du rotor et donner, en conséquence, à la pale en rotation, un premier mode naturel de trainée nettement au-dessus de la fréquence correspondant à la vitesse nominale de rotation du rotor.

Les rigidités relatives en traction de deux tirants reliant deux manchons diamétralement opposés et en compression des deux butées sphériques lamifiées installées entre les manchons correspondants et le corps de moyeu sont choisies dans un rapport préétabli de telle sorte que l'effort centrifuge provenant de chaque pale en rotation puisse s'équilibrer au prorata de ces rigidités, pour une partie sur la pale diamétralement opposée chargeant ainsi les deux tirants en traction et pour la partie restante, sur le corps de moyeu par la butée sphérique lamifiée correspondante, chargée en compression.

Ainsi, la structure particulière de l'invention, autorisant le partage de la transmission des efforts dus aux forces centrifuges d'une pale entre la pale diamétralement opposée et le corps de moyeu, permet de soulager d'autant les éléments structuraux de la tête de rotor et en particulier les butées lamifiées sphériques.

Dans cette configuration du système de raccordement, les deux tirants ont à chacune de leurs extrémités une attache, qui est reliée au manchon correspondant par un moyen de fixation dont l'axe est sensiblement parallèle à l'axe du rotor, moyen constitué par un boulon reliant le manchon à l'attache du tirant.

Dans une première forme de réalisation de l'invention, chacun des tirants est constitué par un faisceau de lames métalliques minces empilées, lames dont les extrémités sont conformées en oeillet pour recevoir les boulons de liaison aux manchons. Dans cette configuration des tirants, les lames métalliques minces situées à l'extérieur du faisceau sont d'une largeur inférieure à celle des lames intérieures, de façon à répartir entre elles les contraintes de cisaillement dues à leur torsion. De plus, afin d'éviter la corrosion de contact entre les lames, celles-ci sont enduites d'un revêtement plastique antifriction.

Dans une deuxième forme de réalisation de l'invention, chacun des tirants est constitué par un bobinage en écheveau de fils métalliques à haute résistance mécanique enrobés dans une matière souple. Les fils sont, par exemple, en acier et la matière souple d'enrobage, de l'élastomère.

Préférentiellement, chacun des tirants a une section de forme ellipsoïdale, et afin de tirer le meilleur parti de cette structure, chacun de ces tirants est en matériau composite filamentaire constitué de filaments à haute résistance mécanique disposés parallèlement suivant l'axe longitudinal du tirant et agglomérés par une résine. Le matériau composite peut être constitué par un bobinage de fibres minérales ou synthétiques à haute résistance mécanique, agglomérées par une résine synthétique polymérisée à chaud. Selon une constitution préférée du matériau, les fibres à haute résistance mécanique de bobinage sont du type aramide et la résine est du type époxy, mais elles peuvent être également en verre.

Avantageusement et en partant de la constitution des tirants décrite ci-dessus, les deux attaches de chacun des tirants sont constituées par une douille cylindrique autour de laquelle est bobinée l'extrémité correspondante des tirants. Plus précisément, chacun des tirants est obtenu par bobinage en écheveau sur la douille en forme, disposée à chacune de leurs extrémités, de manière à constituer l'attache correspondante. Le tirant est ensuite polymérisé à chaud et sous tension dans un moule en forme.

Dans une structure préférentielle de l'invention, les extrémités de deux tirants voisins, qui sont reliées au même manchon, sont solidarisées entre elles en étant disposées dans une structure stratifiée. Chacune des structures stratifiées comporte une coque en tissus de fibres à haute résistance enrobées de résine synthétique et un remplissage en compound. Le tout est ensuite polymérisé sous pression à chaud.

Chacun des systèmes de raccordement, selon l'invention, présente ainsi l'avantage de constituer un sous-ensemble complet sur lequel chacun des manchons vient coiffer les deux extrémités des tirants correspondants qui sont solidarisées dans la structure stratifiée, et dont les attaches sont fixées dans ce manchon par les deux boulons qui traversent des alésages ménagés dans les deux douilles de leurs extrémités.

Afin de remplir au mieux sa fonction, chacune des butées sphériques lamifiées comporte une partie centrale, déformable par rotation autour du centre commun des coupelles sphériques qui la composent, et qui est solidarisée d'une part à une armature interne et d'autre part à une armature externe. L'armature externe est liée au corps de moyeu, tandis que l'armature interne est solidaire en mouvement du pied de la pale correspondante par l'intermédiaire de son manchon avec lequel cette armature interne est solidarisée par des moyens de fixation, dont l'axe est sensiblement parallèle à l'axe du rotor, et qui sont constitués par des boulons. Egalement, l'armature externe de chacune des butées sphériques lamifiées est liée au corps de moyeu par l'intermédiaire de fixations, dont l'axe est sensiblement parallèle à l'axe du rotor, et qui sont constitués par deux boulons qui traversent des alésages ménagés dans l'armature externe.

Dans une forme préférentielle de l'invention, l'attache de chacun de ces deux tirants à chaque manchon est disposée à l'extérieur de la butée sphérique lamifiée de ce manchon, et de manière que la longueur des deux tirants soit sensiblement supérieure à la distance entre les centres des deux butées sphériques lamifiées diamétralement opposées.

Dans une forme préférentielle de l'invention, l'armature interne de chacune des butées sphériques lamifiées est montée dans une entretoise de liaison, qui est solidaire du manchon correspondant, par l'intermédiaire de deux boulons de fixation qui traversent des alésages ménagés dans cette entretoise de liaison. Plus précisément, l'armature interne de chacune des butées sphériques lamifiées comporte un logement cylindrique axial qui reçoit un tenon correspondant aménagé sur l'entretoise de liaison, l'axe du logement cylindrique axial et du tenon étant sensiblement parallèle à l'axe longitudinal du manchon et de la pale correspondante.

Selon un mode de réalisation de l'invention, chaque manchon est constitué par un corps tubulaire allongé de section ovoïdale dont l'axe longitudinal est sensiblement celui de la pale correspondante, et dont l'extrémité vers l'extérieur par rapport à l'axe du rotor est fermée par une paroi transversale mince de raidissement. Ce corps à section ovoïdale comporte un évidement sur ses faces interne et externe par rapport à la prise de mouvement, évidements situés en regard pour le passage de l'armature externe de la butée sphérique lamifiée.

Chaque manchon comporte de plus, à son extrémité intérieure, tournée vers l'axe du rotor, une double chape entre les branches de laquelle vient se fixer l'entretoise de liaison.

Chaque manchon comporte également, à son extrémité extérieure, au-delà de la paroi transversale mince de raidissement, une double chape dans laquelle se fixe le pied de la pale correspondante.

Chaque manchon comprend également, dans sa partie intermédiaire centrale et près de la paroi transversale mince de raidissement, deux alésages d'axe sensiblement parallèle à l'axe rotor et destinés à recevoir les boutons de fixation des attaches des tirants.

Chaque manchon comporte enfin, sur l'une de ses parois longitudinales, deux oreilles disposées face à face et perpendiculairement à ladite paroi, de manière à constituer une chape pour recevoir l'attache articulée de la bielle de commande de pas de la pale correspondante.

La structure de chacun des manchons, ainsi que la présence d'une entretoise de liaison qui coopère avec l'armature interne de la butée sphérique lamifiée, offrent l'avantage de permettre le remplacement d'une butée sphérique lamifiée sans démontage complet de l'ensemble. En effet, le remplacement éventuel d'une de ces butées peut se faire par le démontage des deux boutons de fixation de son armature externe et par le dégagement latéral de l'armature interne de son encastrement sur l'entretoise de liaison du manchon, afin de permettre son passage par l'évidement ménagé dans la paroi externe du manchon par rapport à la prise de mouvement.

Selon un mode de réalisation de l'invention, le corps de moyeu est un cylindre creux qui est disposé à l'extrémité de l'arbre rotor, et dans lequel sont logés les moyens d'articulation qui sont constitué par les butées sphériques lamifiées. Ce corps de moyeu comporte des ouvertures radiales diamétralement opposées et en nombre égal au nombre de pales. Ce corps de moyeu est constitué en deux parties : une partie interne et une partie externe, la partie interne étant raccordée à l'autre rotor, et la partie externe étant en forme de couvercle qui est solidarisée avec la partie interne.

Plus précisément, le couvercle est fixé sur la partie interne :
- au moyen de boulons qui sont disposés dans des alésages aménagés sur des portions de collerettes qui sont situées sur le pourtour de la partie interne et du couvercle en forme de couronne,
- et au moyen de boulons qui sont disposés dans des alésages forés dans les armatures externes des butées sphériques lamifiées, et dans des alésages aménagés sur des éléments de collerette situés sur le pourtour de la partie interne et du couvercle, près de la zone centrale des évidements des manchons, de manière à coïncider avec les alésages aménagés sur les armatures externes. Chacune de ces armatures externes des butées sphériques lamifiées est emboîtée respectivement avec la partie interne et le couvercle dans le sens transversal qui est perpendiculaire à l'axe de la pale.

Avantageusement, la partie interne du corps de moyeu est raccordée directement à l'arbre rotor par une embase. Cette embase a une partie évasée de forme tronconique dont la paroi a sa petite base qui est du côté de l'arbre rotor, de manière à constituer un ensemble monobloc. La partie interne est constituée d'une paroi, qui a une forme générale sensiblement tronconique, et dont la grande base a son pourtour qui est constitué par les portions de collerette disposées entre les ouvertures radiales pour le passage des manchons et dont la petite base est reliée à l'embase. Le couvercle est constitué également d'une paroi qui a une forme générale sensiblement tronconique, dont la grande base a son pourtour qui est constitué par les portions de collerette correspondant à celles du corps de moyeu et dont la petite base est fermée par un fond qui est sensiblement plat et parallèle au plan du rotor. Les ouvertures radiales prévues pour le passage des manchons sont disposées, suivant l'axe du rotor, en groupes de deux ouvertures radiales diamétralement opposés avec un léger décalage le long de l'axe rotor entre les groupes de tirants, ce qui permet le libre débattement de ces tirants lors de leur flexion pour suivre les battements et les mises en pas des pales et leur éviter toute interférence.

La tête de rotor de giravion, selon l'invention, offre ainsi la particularité d'avoir un ensemble qui permet de répartir, entre les butées sphériques lamifiées et les tirants interpales, les efforts dus à la force centrifuge sur les pales. De plus, cet ensemble offre l'avantage d'avoir une structure avantageuse pour faciliter le montage et le démontage des butées sphériques lamifiées qui, grâce à leur architecture particulière qui se combine avec l'architecture originale du manchon correspondant, peuvent être remplacées facilement sans avoir à démonter entièrement la tête de rotor du giravion.

D'autres avantages ressortiront de l'invention qui sera mieux comprise, à l'aide de la description donnée ci-dessous d'un exemple particulier de réalisation pour un rotor arrière quadripale d'hélicoptère décrit à titre non limitatif, en référence aux dessins annexés, sur lesquels :
- la Figure 1 est une vue suivant le plan du rotor de la tête de rotor arrière quadripale d'hélicoptère selon l'invention, le couvercle étant en partie arraché pour laisser apparaître les deux systèmes de raccordement perpendiculaires l'un par rapport à l'autre, les deux manchons étant en demi-coupe suivant le plan du rotor, avec pour le manchon représenté sur la partie inférieure de la planche, un arraché partiel de la demi-vue extérieure du manchon afin de montrer les détails de la butée sphérique lamifiée ;
- la Figure 2 est une vue en coupe suivant le plan II-II de la Figure 1, les parois des manchons étant en coupe partielle afin de montrer la liaison entre les tirants et chacun de ces manchons ;
- la Figure 3 est une vue en coupe axiale suivant le plan III-III, les manchons étant en coupe partielle ;
- la Figure 4 est une vue suivant le plan IV-IV de la Figure 3 ;
- la Figure 5 est une vue suivant le plan V-V de la Figure 1 ;
- la Figure 6 est une vue suivant le plan VI-VI de la Figure 1 ;
- la Figure 7 est une vue suivant le plan VII-VII de la Figure 1 ;
- la Figure 8 est une vue suivant le plan VIII-VIII de la Figure 1 ;
- la Figure 9 est une vue en coupe à grande échelle de la liaison entre la butée sphérique lamifiée et le manchon représenté sur la Figure 3 ;
- la Figure 10 est une vue suivant 10 de la Figure 9 ;
- la Figure 11 est une vue schématique de l'ensemble d'un système de raccordement avec les deux manchons et les deux pales correspondantes en coupe axiale suivant l'axe du rotor lors d'un battement symétrique des pales ;
- la Figure 12 est une vue analogue à la Figure 11 pour un battement antisymétrique des deux pales diamétralement opposées ;
- la Figure 13 est une vue schématique en coupe suivant le plan du rotor de l'ensemble d'un système de raccordement avec les manchons et les pales lors d'une traînée symétrique ;
- la Figure 14 est une vue analogue à la Figure 13 pour une traînée antisymétrique de deux pales diamétralement opposées ;
- la Figure 15 est une vue schématique en perspective du système de raccordement de deux pales diamétralement opposées lors d'une commande de pas général ;
- la Figure 16 est une vue analogue à la Figure 15 d'un système de raccordement entre deux pales diamétralement opposées lors du pas cyclique et dû au battement antisymétrique.

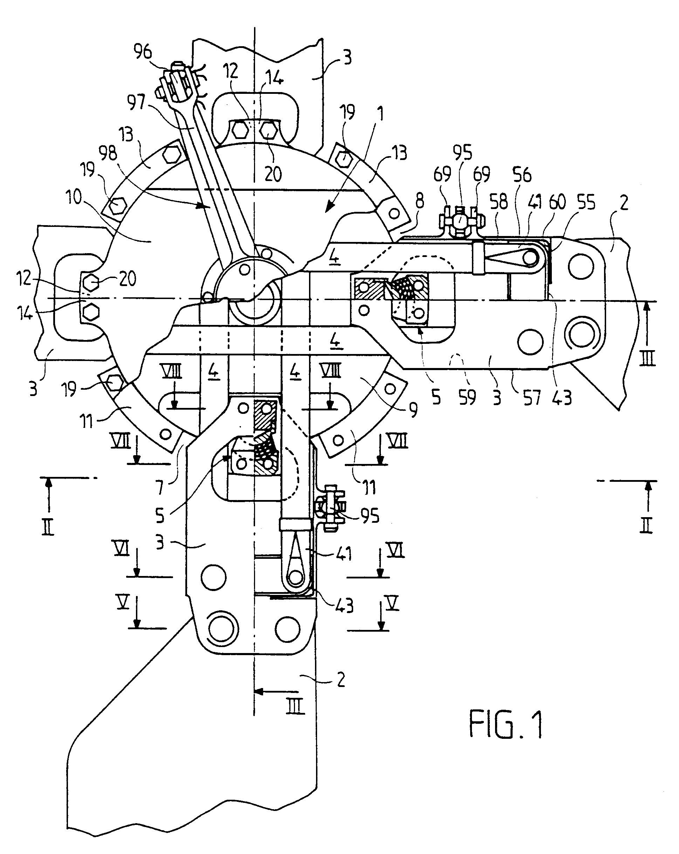

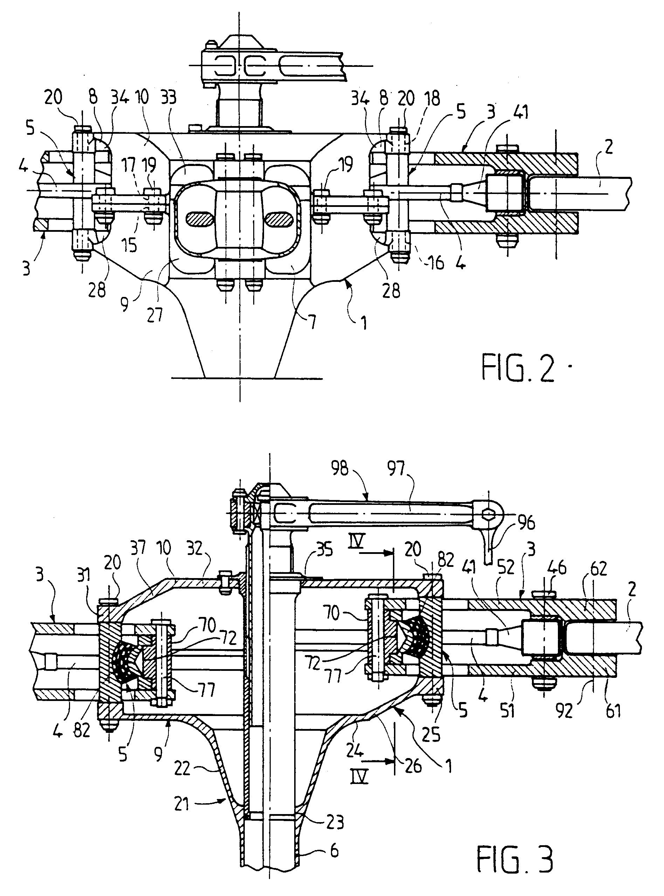

L'ensemble d'une tête de rotor arrière d'hélicoptère selon l'invention, est représenté sur les Figures 1, 2 et 3. Comme on peut le voir sur la Figure 1, la tête de rotor comporte un nombre pair de pales 2, qui sont disposées par groupe de deux pales 2 situées de manière diamétralement opposées l'une par rapport à l'autre, relativement à l'axe du rotor. Un système de raccordement relie chaque pale 2 à la pale 2 diamétralement opposée, et ce système de raccordement est agencé de façon à n'avoir aucune liaison avec le moyeu du rotor.

Chaque pale 2 est reliée au corps de moyeu 1 par l'intermédiaire d'un manchon 3. Chacun des manchons 3 est disposé entre l'emplanture de la pale 2 et le corps de moyeu 1, et il s'appuie sur la périphérie de ce corps de moyeu 1 par une butée formant également articulation en battement et en pas qui est constituée par une butée sphérique lamifiée 5. Chacun des deux systèmes de raccordement de deux pales 2 diamétralement opposées relie les deux manchons 3 des pales correspondantes 2, c'est-à-dire les deux manchons 3 qui sont également diamétralement opposés.

Chacun des deux systèmes de raccordement est relativement rigide en traînée et il est composé de deux tirants 4. Ces deux tirants 4 sont disposés dans un plan parallèle au plan du rotor de part et d'autre de l'axe longitudinal commun aux deux pales 2 qui sont diamétralement opposées, et que ce système de raccordement relie. De plus ces deux tirants 4 sont parallèles l'un par rapport à l'autre, et ils sont sensiblement écartés par rapport à l'axe longitudinal commun des deux pales, avec lequel ces deux tirants 4 sont également parallèles. Selon une caractéristique essentielle de l'invention, l'attache 41 de chacun des deux tirants 4 à chacun des deux manchons 3 qui sont diamétralement opposés, est disposée à l'extérieur de la butée sphérique lamifiée 5 de ce manchon 3 par rapport à l'axe du rotor. La disposition générale du système de raccordement des deux manchons 3 correspondants et des deux butées sphériques lamifiées 5 est telle que la longueur de chacun des deux tirants 4 entre ses attaches 41 est sensiblement supérieure à la distance qui existe entre les centres des deux butées sphériques lamifiées 5 correspondantes qui sont diamétralement opposées .

Afin de tirer pleinement parti de la structure de ces systèmes de raccordement propres à l'invention, les deux tirants 4 qui constituent chacun de ces systèmes de raccordement, sont dimensionnés en section de manière à être souples en flexion dans le plan perpendiculaire au plan du rotor et souples en torsion suivant leur propre axe longitudinal, et enfin d'être peu déformables en traction. Afin de répartir les efforts centrifuges entre les différents constituants de la tête de rotor selon l'invention, les butées sphériques lamifiées 5 de chacun des deux manchons 3 diamétralement opposés présentent des rigidités relatives en compression et les deux tirants 4 reliant ces deux manchons 3 présentent des rigidités relatives en traction, telles que les efforts centrifuges provenant de chaque pale 2 soient transmis à la pale 2 diamétralement opposée et au corps de moyeu 1 au prorata de ces rigidités. Ainsi, la structure particulière de l'invention permet de reporter une partie des efforts dus aux forces centrifuges d'une pale 2 sur l'autre pale 2 diamétralement opposée, ce qui soulage d'autant la charge en compression des butées sphériques lamifiées d'articulation.

Dans l'exemple de réalisation représenté sur les Figures, la commande se fait par araignée, c'est-à-dire que chaque extrémité d'un bras 97 du plateau 98 de commande mobile axialement vient attaquer une chape, qui est disposée sur l'un des côtés du manchon 3 par l'intermédiaire d'une bielle à rotule 96, dont l'attache 95 vient se monter dans cette chape.

Comme on peut le voir sur les Figures 1, 2 et 3, le corps de moyeu 1 est un cylindre creux qui est disposé à l'extrémité de l'arbre rotor 6, et dans lequel sont logés les moyens d'articulation constitués par les butées sphériques lamifiées 5. Le corps de moyeu 1 est en deux parties : une partie interne 9 et une partie externe en forme de couvercle 10. La partie interne 9 est raccordée à l'arbre rotor 6, et le couvercle 10 est solidarisé avec la partie interne 9. Le corps de moyeu 1, correspondant au mode de réalisation de l'invention représenté sur les Figures, comporte quatre ouvertures radiales : deux ouvertures radiales internes 7 et deux ouvertures radiales externes 8. Les ouvertures radiales internes 7 sont relativement plus proches de l'arbre rotor 6 que les ouvertures radiales externes 8. De plus, les ouvertures radiales internes sont diamétralement opposées et dans une direction qui est perpendiculaire aux ouvertures radiales externes, également diamétralement opposées. Ces ouvertures radiales internes 7 et externes 8 sont destinées à laisser passer les manchons 3 avec leurs systèmes de raccordement constitués par les tirants 4.

Le couvercle 10 est solidarisé avec la partie interne 9 par l'intermédiaire de portions de collerettes 11 qui sont situées sur le pourtour de la partie interne 9, et par l'intermédiaire de portions de collerettes 13 qui sont situées également sur le pourtour du couvercle 10. Ces pourtours sont l'un et l'autre en forme de couronne circulaire et les portions de collerettes 11 et 13 s'appliquent respectivement les unes contre les autres entre les ouvertures radiales internes 7 et les ouvertures radiales externes 8. Les portions de collerettes 11 et 13 sont fixées les unes contre les autres au moyen de boulons 19, qui sont disposés dans des alésages 15 aménagés sur les portions de collerettes 11, et dans des alésages 17 aménagés sur les portions de collerette 13. De plus, le couvercle 10 est solidarisé avec la partie interne 9 par des boulons 20 qui assurent la fixation des butées sphériques lamifiées 5. Ces boulons 20 sont disposés dans des alésages 16 qui sont aménagés dans des éléments de collerette 12 situés sur le pourtour de la partie interne 9, et dans des alésages 18 aménagés dans des éléments de collerette 14 situés sur le pourtour du couvercle 10. Ces éléments de collerette 12 et 14 sont disposés près de la zone centrale des manchons 3, de manière à pouvoir coïncider avec les butées sphériques lamifiées 5.

Comme on peut le voir sur les Figures 1, 2 et 3, chaque manchon 3 est constitué par un corps tubulaire allongé de section ovoïdale dont l'axe longitudinal est sensiblement celui de la pale correspondante. Ce corps comporte une paroi interne 51 et une paroi externe 52, par rapport à la prise de mouvement, et deux parois longitudinales 56 et 57, situées dans un plan perpendiculaire au plan du rotor, et dont l'extrémité extérieure est fermée par une paroi transversale mince de raidissement 55, et qui comporte dans ses parois interne 51 et externe 52, par raport à la prise de mouvement, deux évidements 53, 54 situés en regard pour le passage de la butée sphérique lamifiée 5.

Ledit corps tubulaire comporte de plus :
- à son extrémité intérieure, une double chape entre les branches 73, 74 de laquelle vient se fixer l'entretoise de liaison 70, au moyen des deux boulons de fixation 77 qui traversent d'une part les alésages 71 ménagés dans l'entretoise de liaison 70 et d'autre part les alésages 67, 68 ménagés dans les branches 73, 74 de ladite double chape ;
- à son extrémité extérieure, au-delà de la paroi mince de raidissement 55, une chape double dans laquelle se monte le pied de la pale 2 correspondante, deux alésages 63, 64 étant ménagés dans chacune des branches 61 et 62 en regard et sensiblement parallèlement à l'axe du rotor, de façon à recevoir les deux broches 92 d'attache de pale ;
- dans sa partie intermédiaire centrale et près de la paroi transversale mince de raidissement 55, des alésages 65, 66 d'axes sensiblement parallèles à l'axe du rotor et destinés à recevoir les deux boulons 46 de fixation des attaches 41 des tirants 4.

Deux oreilles 69 sont disposées face à face et perpendiculairement à l'une des parois longitudinales 56 du manchon 3, avec laquelle elles sont solidaires, de manière à constituer une chape pour recevoir l'attache 95 de commande de pas correspondante. Ainsi, chacun des manchons 3 reçoit le mouvement de commande de pas, et assure la liaison entre la pale 2 correspondante et le corps de moyeu 1 par l'intermédiaire de la butée sphérique lamifiée 5 correspondante.

Chacun des systèmes de raccordement comporte deux tirants 4 dont chacune des extrémités est constituée par une attache 41, qui est raccordée au manchon 3 correspondant par l'intermédiaire des boulons de fixation 46. Les extrémités des deux tirants 4 voisins reliés au même manchon sont solidarisées entre elles et disposées dans une structure stratifiée 43. Cette structure stratifiée 43 vient se monter à l'intérieur du logement du manchon 3 correspondant qui est constitué par la face interne 58 de la paroi longitudinale 56, par la face interne 59 de la paroi longitudinale 57, et par la face interne 60 de la paroi transversale 55. Chacun des manchons 3 vient ainsi coiffer les deux extrémités des tirants 4 correspondants qui sont solidarisés dans la structure stratifiée 43, et dont les attaches 41 sont fixées dans ce manchon 3 par les deux boulons 46 de fixation. Les deux tirants 4 de chacun des systèmes de raccordement sont distants l'un de l'autre, de manière à laisser un passage suffisant pour le montage des deux butées sphériques lamifiées 5 avec leur entretoise de liaison 70.

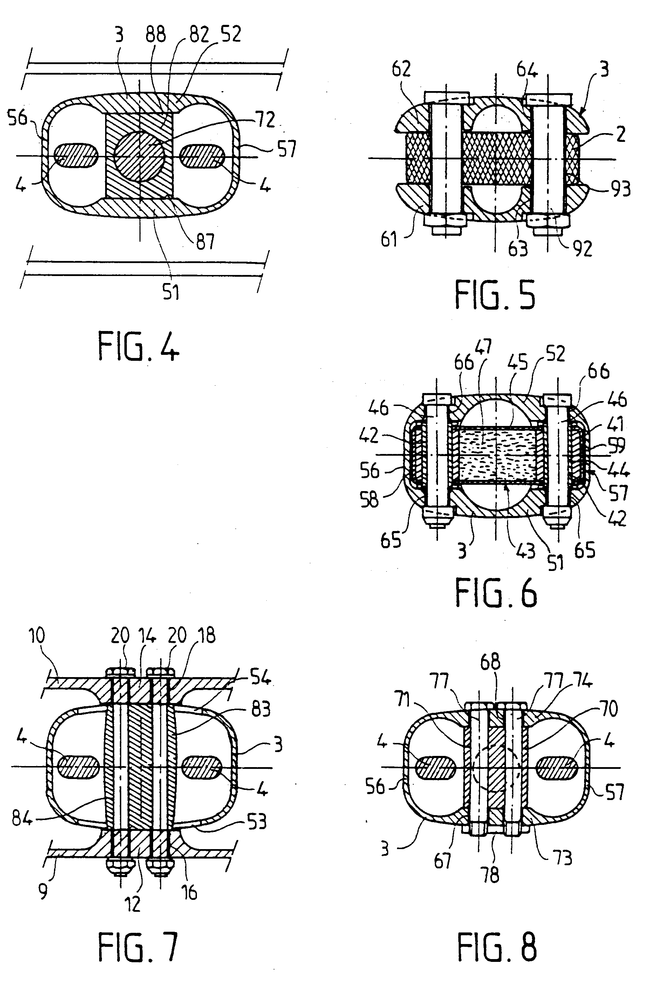

Chacune des butées sphériques lamifiées 5 est raccordée d'une part au corps de moyeu 1 dont il assure en partie la solidarisation du couvercle 10 avec la partie interne 9, et elle est raccordée d'autre part au manchon 3 correspondant par l'intermédiaire de l'entretoise de liaison 70, qui solidarise l'extrémité interne de chacune des deux parois interne 51 et externe 52 du manchon 3 correspondant. De ce fait, chacune des butées sphériques lamifiées 5 est disposée à la périphérie du corps de moyeu 1, et assure la liaison de ce corps de moyeu 1 avec chacun des manchons 3 correspondants. Comme on peut le voir sur la Figure 4, l'entretoise de liaison 70 est disposée entre chacun des deux tirants 4, qui sont suffisamment écartés l'un par rapport à l'autre. Ces deux tirants 4 sont montés à l'intérieur des parois longitudinales 56 et 57 du manchon 3.

La Figure 5 montre en coupe le détail de la liaison de chacun des manchons 3 avec la pale 2 correspondante. Chacune des pales 2 est reliée au manchon 3 correspondant par des moyens de fixation dont l'axe est sensiblement parallèle à l'axe du rotor. Ces moyens de fixation sont les broches 92, qui traversent des alésages 63 et 64 aménagés dans une chape double du manchon 3. Ces alésages 63 et 64 sont alignés l'un par rapport à l'autre, et correspondent à un alésage 93, qui est aménagé dans le pied de la pale correspondante 2.

La Figure 6 est une coupe qui montre le détail de la liaison de chacun des manchons 3 avec l'extrémité des deux tirants correspondants 4. L'attache 41 de chacune des extrémités voisines des deux tirants 4 du système de raccordement est relié au manchon 3 correspondant par un moyen de fixation, dont l'axe est sensiblement parallèle à l'axe du rotor. Ce moyen de fixation est constitué par le boulon 46 qui relie le manchon 3 à l'attache 41 du tirant 4 correspondant. Les deux attaches 41 de chacun des deux tirants 4 sont constituées par une douille cylindrique 42 autour de laquelle est bobinée l'extrémité correspondante du tirant 4. Ainsi, chacun des manchons 3 vient coiffer les deux extrémités des tirants 4 correspondants, qui sont solidarisés dans la structure stratifiée 43. Les attaches 41 sont fixées dans ce manchon 3 par les deux boulons 46 qui traversent des alésages 44 aménagés dans les deux douilles 42 de leurs extrémités. Les boulons de fixation 46 des attaches 41 des tirants 4 traversent des alésages 65 aménagés dans la paroi interne 51, et des alésages 66 aménagés dans la paroi externe 52. Chacun des alésages 65 est disposé en face d'un alésage 66, de manière à constituer un axe sensiblement parallèle à l'axe du rotor et suivant lequel se monte le boulon de fixation correspondant 46 qui traverse l'alésage 44 de la douille 42 de l'attache 41 du tirant 4.

La Figure 7 montre le détail en coupe de la liaison entre chacune des butées sphériques lamifiées 5 avec le corps de moyeu 1. Cette liaison est constituée par des moyens de fixation dont l'axe est sensiblement parallèle à l'axe du rotor, et qui consistent en deux boulons 20 qui traversent des alésages 84 aménagés dans l'armature externe 83 de chacune des butées sphériques lamifiées 5. Chacun des deux boulons 20 traversent ainsi les alésages 84 forés dans l'armature externe 83 de la butée sphérique lamifiée 5, et traversent également les alésages 16 et 18 aménagés respectivement sur la partie interne 9 et le couvercle 10 du corps de moyeu 1. Plus précisément, les alésages 16 sont aménagés sur les éléments 12 de collerette situés sur le portour de la partie interne 9 et les alésages 18 sont aménagés sur les éléments 14 de collerette situés sur le pourtour du couvercle 10. Ces éléments de collerette 12 et 14 sont situés près de la zone centrale des manchons 3, c'est-à-dire à proximité des évidements 53 et 54 des parois interne 51 et externe 52 du manchon 3, de manière à ce que les alésages 16 et 18 coïncident avec les alésages 84 de l'armature externe 83 de la butée sphérique lamifiée 5 correspondante. Ainsi, chacune des butées sphériques lamifiées 5 est solidarisée avec ce corps de moyeu 1 par les boulons de fixation 20 qui traversent les alésages 16 aménagés dans la partie interne 9, qui traversent également les alésages 18 aménagés dans le couvercle 10 et qui traversent enfin les alésages 84 aménagés dans l'armature externe 83 de chacune des butées sphériques lamifiées 5.

La Figure 8 montre le détail en coupe de la liaison entre chacun des manchons 3 avec l'entretoise de liaison 70 de la butée sphérique lamifiée 5 correspondante. Chacun des manchons 3 est solidarisé avec l'entretoise de liaison 70 correspondante par des moyens de fixation dont l'axe est sensiblement parallèle à l'axe du rotor, et qui sont constitués par deux boulons 77. Des alésages 67 sont aménagés dans la paroi interne 51 du manchon 3, et des alésages 68 sont aménagés dans la paroi externe 52. Chacun des alésages 67 est disposé en face d'un des alésages 68, de manière à constituer un axe sensiblement parallèle à l'axe du rotor. Ainsi, chacun des boulons 77 de fixation traversent les alésages 67 et 68 aménagés dans le manchon 3, et traversent l'alésage 71 aménagé dans l'entretoise de liaison 70 correspondante. Les deux boulons de fixation 77 viennent se bloquer sur une plaque 78.

Les Figures 1, 2, 3 et 7 permettent de voir les différents détails de la structure de l'ensemble du corps de moyeu 1. Comme cela a été décrit précédemment, ce corps de moyeu 1 comporte quatre ouvertures radiales 7 et 8 destinées à assurer le passage des manchons 3. Ces ouvertures radiales 7 et 8 sont disposées par groupe de deux qui sont diamétralement opposées l'une par rapport à l'autre relativement à l'axe du rotor et qui constituent un groupe d'ouvertures radiales internes 7, et un groupe d'ouvertures radiales externes 8. Le groupe d'ouvertures radiales externes 8 est disposé dans le corps de moyeu 1, de manière qu'il soit relativement plus éloigné de l'arbre rotor 6 que le groupe d'ouvertures radiales internes 7. Cette disposition de décalage suivant l'axe du rotor permet d'éviter toute interférence entre les deux groupes de tirants 4 constituant les systèmes de raccordement, qui sont perpendiculaires l'un par rapport à l'autre. et elle permet ainsi le libre débattement des différents tirants 4 lors de leur flexion pour suivre les battements et les mises en pas des pales 2.

Le corps de moyeu 1 comprend deux parties : la partie interne 9 et la partie externe en forme de couvercle 10 qui est solidarisé avec la partie interne 9.

La partie interne 9 du corps de moyeu 1 est raccordée à l'extrémité de l'arbre rotor 6 par une embase 21. Cette embase 21 est constituée par une partie évasée de forme tronconique à paroi 22 qui a sa petite base 23 du côté de l'arbre rotor 6, de manière à ce que l'embase 21 et l'arbre rotor 6 constituent un ensemble monobloc. La partie interne 9 a elle-même une forme générale sensiblement tronconique qui est constituée par une paroi 26, et dont la petite base 24 prolonge l'embase 21. Cette paroi 26 se termine du côté externe par une grande base 25 qui est munie à son pourtour des quatre portions de collerette 11 et des quatre éléments de collerette 12 disposés à sa périphérie.

Le couvercle 10 a une forme générale sensiblement tronconique qui est constituée par une paroi 37, et dont la grande base 31 est munie à son pourtour des quatre portions 13 de collerette et des quatre éléments 14 de collerette disposés à sa périphérie. Cette paroi 37 se prolonge du côté externe par une petite base 32 qui est fermée par un fond sensiblement plat et parallèle au plan du rotor. La petite base 32 de ce couvercle 10 est munie d'une ouverture centrale 35 qui permet le montage et le passage du dispositif d'entraînement du plateau de commande mobile 98. Ce plateau de commande mobile 98 est muni de bras 97 qui portent à leurs extrémités des bielles à rotule 96, dont l'attache de commande de pas 95 est raccordée au manchon 3 correspondant.

Chacune des ouvertures radiales internes 7 est constituée par une demi-ouverture radiale interne 27 aménagée sur la partie interne 9, et par une demi-ouverture radiale interne 33 aménagée sur le couvercle 10. De la même façon, chaque ouverture radiale externe 8 est constituée par une demi-ouverture radiale externe 28 aménagée sur la partie interne 9, et par une demi-ouverture radiale externe 34 aménagée dans le couvercle 10. La butée sphérique lamifiée 5 est bloquée par les deux boulons de fixation 20 qui traversent les alésages 18 du couvercle 10, puis les alésages 84 de l'armature externe 83, et enfin les alésages 16 de la partie interne 9.

Les différents détails de chacun des manchons 3 sont représentés plus particulièrement sur les Figures 1, 9 et 10, ainsi que par les différentes coupes représentées sur les Figures 4 à 8. Comme cela a été décrit précédemment, chacun des manchons 3 est constitué par un corps tubulaire allongé de section ovoïdale, dont l'axe longitudinal est sensiblement celui de la pale 2 correspondante, et dont l'extrémité extérieure, par rapport à l'axe du rotor, est fermée par une paroi transversale mince de raidissement 55, et qui comporte dans ses parois interne 51 et externe 52, par rapport à la prise de mouvement, deux évidements 53, 54 situés en regard pour le passage de la butée sphérique lamifiée 5.

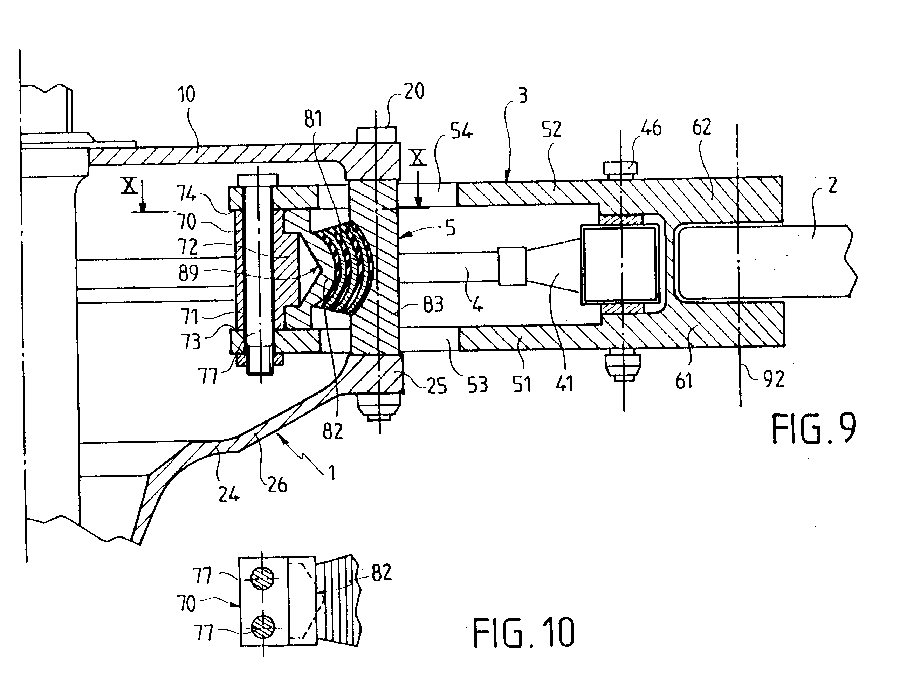

Chaque butée sphérique lamifiée 5 qui constitue l'unique organe d'articulation de la pale 2 sur le corps de moyeu 1 est d'un type bien connu, et elle comporte une partie centrale 81, déformable en torsion, qui est associée à une armature interne 82 et à une armature externe 83. La partie centrale 81 est constituée par un empilement alterné de couches rigides, qui sont généralement métalliques et de couches d'élastomère en forme de calotte sphérique. Cette partie centrale 81 est adhérisée d'une part en position radiale interne sur la face convexe de la calotte sphérique de l'armature externe 83, et d'autre part en position radiale externe sur la face concave de la calotte sphérique de l'armature interne 82 de la butée sphérique lamifiée 5. L'armature interne 82 est solidaire de l'extrémité interne du manchon 3 correspondant, tandis que l'armature externe 83 est liée à la périphérie du corps de moyeu 1 de la tête de rotor d'hélicoptère, comme on peut le voir sur les Figures 9 et 7.

Le détail de la structure de l'entretoise de liaison 70 avec la butée sphérique lamifiée 5 correspondante, et sa liaison avec le manchon 3 sont représentés sur les Figures 8, 9 et 10. Chacune des butées sphériques lamifiées 5 comporte un logement cylindrique axial 89 qui est aménagé dans l'armature interne 82. Ce logement cylindrique 89 reçoit un tenon cylindrique 72 correspondant, qui est aménagé sur l'entretoise de liaison 70. L'axe du logement cylindrique axial 89 et l'axe du tenon cylindrique 72 sont sensiblement parallèles à l'axe longitudinal du manchon 3 et de la pale 2 correspondante, comme on peut le voir sur la Figure 9. L'entretoise de liaison 70 est solidarisée avec le manchon 3 par les boulons de fixation 77 qui traversent les alésages 68 et 67 aménagés respectivement dans les parois externe 52 et interne 51, et ils s'engagent dans les alésages 71 aménagés dans l'entretoise de liaison 70. La butée sphérique lamifiée 5 qui est ainsi solidarisée par son entretoise de liaison 70 avec le manchon 3, est également solidarisée par l'intermédiaire de son armature externe 83 avec le corps de moyeu 1. Comme on peut le voir sur la Figure 7, les boulons de fixation 20 s'engagent dans les alésages 18 aménagés dans l'élément de collerette 14 du couvercle 10, puis ils traversent les alésages 84 de l'armature externe 83 et enfin ils s'engagent dans les alésages 16 aménagés dans l'élément de collerette 12 de la partie interne 9.

Le détail de la structure de chacun des systèmes de raccordement est représenté sur les Figures 1, 6, 7 et 9.

Dans une première forme de réalisation de l'invention, chacun des tirants 4 est constitué par un faisceau de lames métalliques minces empilées, lames dont les extrémités sont conformées en oeillet pour recevoir les boulons 46 de liaison aux manchons 3. Dans cette configuration des tirants 4, les lames métalliques minces situées à l'extérieur du faisceau sont d'une largeur inférieure à celle des lames intérieures, de façon à répartir entre elles les contraintes de cisaillement dues à leur torsion. De plus, afin d'éviter la corrosion de contact entre les lames, celles-ci sont enduites d'un revêtement plastique antifriction.

Dans une deuxième forme de réalisation de l'invention, chacun des tirants 4 a une section de forme ellipsoïdale et est constitué par un bobinage en écheveau de fils métalliques à haute résistance mécanique enrobés dans une matière souple. Les fils sont, par exemple, en acier et la matière souple d'enrobage est de l'élastomère.

Dans une troisième forme de réalisation de l'invention, chacun des tirants 4 a une section de forme ellipsoïdale et est constitué par un bobinage en écheveau de fils de fibres minérales ou synthétiques, à haute résistance mécanique, agglomérées par une résine synthétique polymérisée à chaud. Les fibres à haute résistance mécanique sont, par exemple, des fibres de verre agglomérées par une résine du type époxy ou, par exemple, des fibres aramides agglomérées par une résine époxy. Chacun des tirants 4 est obtenu par bobinage en écheveau de stratifils préimprégnés de résine synthétique sur une douille cylindrique 42, disposée à chacune de leurs extrémités, de manière à constituer l'attache 41 correspondante, ledit écheveau de stratifils préimprégnés étant ensuite polymérisé à chaud et sous tension dans un moule en forme.

Dans toutes ces formes de réalisation des tirants 4, les extrémités de deux tirants 4 voisins reliés au même manchon 3 sont disposées dans une structure stratifiée 43 afin d'être solidarisées entre elles. Cette structure stratifiée 43 comporte une coque 45 en tissus de fibres synthétiques, à haute résistance mécanique, enrobées dans de la résine synthétique.

Les deux extrémités des tirants 4 voisins sont ainsi disposées dans cette coque 45 qui est ensuite remplie de résine chargée du type qualifiée par un terme anglais de "compound" 47, le tout étant ensuite polymérisé à chaud et sous pression dans un moule en forme.

Chaque structure stratifiée 43 du système de raccordement vient se monter dans le logement du manchon 3 correspondant, qui est constitué par la face interne 60 de la paroi transversale 55, et par les faces internes 58 et 59 des parois longitudinales respectives 56 et 57. Ainsi, chacun des deux manchons 3 vient coiffer les deux extrémités des tirants 4 correspondants qui sont solidarisés dans la structure stratifiée 43, et dont les deux attaches 41 sont fixées dans ce manchon 3 par l'intermédiaire des deux boulons de fixation 46. Chaque boulon de fixation 46 traverse l'alésage 66 aménagé dans la paroi externe 52 du manchon 3, puis il s'engage dans l'alésage 44 ménagé dans la douille 42 de l'attache 41, et enfin il traverse l'alésage 65 aménagé dans la paroi interne 51 du manchon 3.

Le montage de la tête de rotor de giravion selon l'invention se fait dans l'ordre décrit ci-après. Sur la partie interne 9 du corps de moyeu 1 solidaire de l'arbre d'entraînement 6 par l'intermédiaire de l'embase 21, on met en place un premier ensemble qui est constitué par le système de raccordement interne avec les deux tirants 4 équipés à chacune de leurs extrémités d'un manchon 3. Par l'un des évidements 53 et 54 ménagés dans les parois interne et externe 51 et 52 par rapport à la prise de mouvement de chaque manchon 3, on place les deux butées sphériques lamifiées 5 dont l'armature interne 82 comporte le logement cylindrique axial 89. On déplace alors chacune des butées sphériques lamifiées 5 vers le centre du corps de moyeu 1, de façon que le logement cylindrique axial 89 ménagé dans l'armature interne 82 vienne en concordance avec le tenon cylindrique 72 correspondant ménagé sur l'entretoise de liaison 70 avec le manchon 3. De la même façon, on place ensuite le second système de raccordement externe avec les deux tirants 4 et les deux manchons 3, ainsi que les butées sphériques lamifiées 5 correspondantes. On termine le montage en mettant en place le couvercle 10 du corps de moyeu 1, puis les boulons de fixation 19 de ce couvercle 10 sur la partie interne 9 du corps de moyeu 1. Enfin, on monte les boulons de fixation 2O des armatures externes 83 des butées sphériques lamifiées 5. La constitution originale de l'entretoise de liaison 7O avec la butée sphérique lamifiée 5 permet un remplacement éventuel de cette butée qui est particulièrement aisé. En effet, le remplacement peut se faire par le démontage des deux boulons de fixation 20 de l'armature externe 83, et par le dégagement latéral, c'est-à-dire suivant l'axe de la pale 2, de son encastrement sur l'entretoise de liaison 7O du manchon 3, afin de permettre son passage par l'un des évidements 53 et 54 aménagés dans le manchon 3.

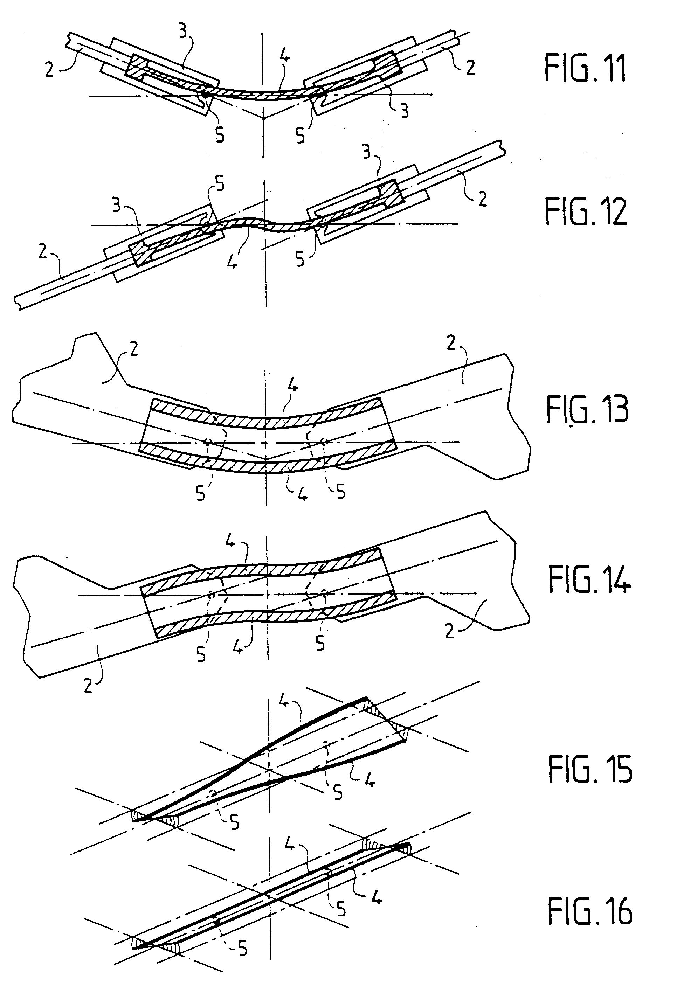

L'avantage du système de raccordement utilisé dans l'invention et dans ses réalisations spécifiques se voit clairement sur les figures 11 à 16 où est schématisé l'ensemble du montage avec la grande longueur du système de raccordement par rapport à la distance entre les butées sphériques lamifiées 5. Les figures 11 et 12 sont des vues schématiques par un plan passant par l'axe du rotor. La figure 11 représente la façon de travailler des tirants 4 lors du battement symétrique des deux pales 2 en sollicitation statique par la portance. La figure 12 est une vue schématique qui montre le travail des tirants 4 lors d'un battement antisymétrique des deux pales 2 en sollicitations dynamiques vibratoires. Les figures 13 et 14 sont des vues suivant le plan du rotor qui montrent la déformation des tirants 4 lors d'une traînée symétrique qui est représentée sur la figure 13 sous les sollicitations de traînée des pales 2, et lors d'une traînée antisymétrique qui est représentée sur la figure 14 sous la sollicitation statique d'entraînement du rotor. Enfin, les figures 15 et 16 sont des vues en perspective schématique qui montrent les déplacements et/ou les déformations des tirants 4 pour le pas général en figure 15, et pour le pas cyclique dû au battement antisymétrique en Figure 16. On remarquera que, dans ce dernier cas, il n'y a pas de déformation des tirants.

Ainsi dans l'architecture de la tête de rotor propre à l'invention, la dissociation complète de chaque paire de tirants 4 par rapport au corps de moyeu 1 et la liaison hyperstatique de chaque manchon 3 avec le corps de moyeu 1 par l'intermédiaire des butées sphériques lamifiées 5, en grande partie déchargées des contraintes de compression dues aux efforts centrifuges, permettent :
- de donner aux tirants 4 une longueur torsible et flexible maximale jusqu'au centre du corps de moyeu 1,
- de supprimer l'encastrement des tirants 4 sur le corps de moyeu 1 et de libérer au maximum les déformées de traînée et de battement amenant ainsi une forte réduction des contraintes dynamiques qui les sollicitent,
- de supprimer, dans l'élément de liaison souple interpale, toute contrainte de pas cyclique en raison de l'absence de torsion dynamique et, par conséquent, de réduire notablement les efforts dans le système de commande de pas,
- en partageant les efforts centrifuges entre les deux tirants 4 et la butée sphérique lamifiée 5, de réduire la section des tirants 4 et de diminuer la raideur de torsion, les contraintes découplées de battement et de traînée pouvant être beaucoup plus faibles que dans un rotor à lame unique,
- en déchargeant les butées sphériques lamifiées 5 d'une grande partie de la force centrifuge, d'accroître de façon très sensible leur durée de vie en service,
- d'avoir des interfaces bien mécaniques entre les divers composants,
- enfin de rendre les pales 2 démontables une à une comme sur les moyeux articulés.

Du fait de ces particularités, les avantages offerts par ce concept inventif sont :
- un affinement aérodynamique d'ensemble du moyeu et des pièces d'attache des pales, surtout en comparaison avec les rotors à lames sur lesquels une manchette recouvre les lames dans leur partie de liaison avec la partie courante de la pale, laquelle manchette doit avoir un important volume interne pour autoriser le débattement de la lame en torsion,
- une masse peu élevée du fait que la partie centrale du moyeu métallique ne voit pas les efforts centrifuges,
- une capabilité de plus grande vitesse pour l'hélicoptère, toutes choses égales par ailleurs, par réduction des contraintes dynamiques dans les éléments souples,
- une réduction du coût d'entretien du fait de l'absence d'amortisseurs de traînée (coût d'entretien de l'organe lui-même et de ses organes de fixation par rotules),
- une grande simplicité de surveillance (surveillance visuelle pour une maintenance "suivant état") et de remplacement éventuel des pièces à potentiel,
- la séparation complète des pales et du moyeu autorisant des méthodes de fabrication éprouvées pour les tirants et les butées et apportant une bonne modularité pour limiter les coûts d'entretien,
- une augmentation de la fiabilité des dispositifs de commande par l'absence du risque de durcissement en service des articulations de pas, en particulier par brinellage des roulements,
- et enfin des durées de vie élevées pour les composants travaillant en fatigue.

## Revendications

1. Tête de rotor de giravion ayant un nombre pair de pales et comportant un corps de moyeu (1) sur lequel les pales (2) sont par paire et de façon diamétralement opposée montées mobiles en rotation par l'intermédiaire d'articulations et dans laquelle pour chaque paire de pales il est prévu un raccordement rigide à la traction mais élastique à la torsion et à la flexion de battement, entre les pieds desdites pales, ce raccordement étant sans aucune liaison avec le moyeu du rotor, caractérisée en ce que :
- l'articulation de chaque pale (2) sur le corps de moyeu (1) est constituée par une unique butée sphérique lamifiée (5) comprenant entre deux armatures interne et externe rigides, un empilement alterné en forme de portion de sphère de calottes sphériques rigides et de lames en matériau élastique, laquelle butée lamifiée sphérique est solidarisée d'une part par son armature interne à l'extrémité interne par rapport à l'axe rotor d'un manchon creux (3) dont l'autre extrémité est solidarisée au pied de la pale, ledit manchon comportant latéralement un levier d'introduction de la commande en pas de la pale, et d'autre part par son armature externe à la périphérie du corps de moyeu creux sur laquelle ladite butée s'appuie ;
- les manchons diamétralement opposés sont raccordés entre eux par deux tirants (4) identiques, disposés parallèlement au plan du rotor et sensiblement écartés de part et d'autre de l'axe longitudinal commun des deux pales diamétralement opposées, chaque extrémité desdits tirants (4) comportant un alésage d'axe sensiblement parallèle à l'axe rotor pour sa solidarisation à l'intérieur du manchon (3) correspondant par l'intermédiaire d'un boulon traversant deux alésages en concordance ménagés dans ledit manchon (3) ;
- les plans de chaque groupe de deux tirants (4) sont disposés parallèlement entre eux avec un léger décalage suivant l'axe du rotor d'une valeur suffisante pour permettre le libre débattement des tirants (4) lors de leur flexion et de leur torsion pour suivre les battements et les changements de pas des pales, ce décalage étant obtenu par un décalage correspondant de la position parallèlement à l'axe du rotor, des butées sphériques lamifiées (5) correspondant à chaque groupe de deux tirants (4) sur le corps de moyeu (1) ;
- la matière des tirants (4) et le dimensionnement de leur section sont choisis pour que lesdits tirants soient peu déformables en traction suivant leur axe longitudinal et souples en flexion dans le plan perpendiculaire au plan du rotor ainsi qu'en torsion suivant leur propre axe longitudinal ;
- les rigidités relatives en traction de deux tirants (4) reliant deux manchons (3) diamétralement opposés et en compression des deux butées sphériques lamifiées (5) installées entre les manchons (3) correspondants et le corps de moyeu (1) sont choisies dans un rapport pré-établi de telle sorte que l'effort centrifuge provenant de chaque pale (2) en rotation puisse s'équilibrer au prorata de ces rigidités, pour une partie sur la pale (2) diamétralement opposée chargeant ainsi les deux tirants (4) en traction et pour la partie restante, sur le corps de moyeu par la butée sphérique lamifiée correspondante (5), chargée en compression.

2. Tête de rotor de giravion selon la revendication 1 caractérisée en ce que l'attache de chaque tirant (4) à chaque manchon est disposée à l'extérieur de la butée sphérique lamifiée (5) par rapport à l'axe du rotor, de telle sorte que la longueur des deux tirants (4) soit sensiblement supérieure à la distance entre deux butées sphériques lamifiées (5) diamétralement opposées.

3. Tête de rotor de giravion selon l'une des revendications 1 ou 2 caractérisée en ce que chacun des tirants (4) est constitué par un faisceau de lames métalliques minces empilées, lames dont les extrémités sont conformées en oeillet pour recevoir les boulons (46) de liaison aux manchons (3).

4. Tête de rotor de giravion selon la revendication 3, caractérisée en ce que les lames métalliques minces situées à l'extérieur du faisceau sont d'une largeur inférieure à celle des lames internes, de façon à répartir entre elles les contraintes de cisaillement dues à leur torsion.

5. Tête de rotor de giravion selon l'une quelconque des revendications 3 ou 4, caractérisée en ce que les lames sont enduites d'un revêtement plastique antifriction afin d'éviter les corrosions de contact.

6. Tête de rotor de giravion selon les revendications 1 ou 2, caractérisée en ce que chacun des tirants (4) est constitué par un bobinage en écheveau de fils métalliques, à haute résistance mécanique, enrobés dans une matière souple.

7. Tête de rotor de giravion selon la revendication 6, caractérisée en ce que les fils métalliques à haute résistance mécanique sont en acier et la matière souple d'enrobage est de l'élastomère.

8. Tête de rotor de giravion selon les revendications 1 ou 2, caractérisée en ce que chacun des tirants (4) est constituée par un bobinage en écheveau de fils de fibres minérales ou synthétiques, à haute résistance mécanique, agglomérées par une résine synthétique polymérisée à chaud.

9. Tête de rotor de giravion selon la revendication 8, caractérisée en ce que les fibres à haute résistance mécanique sont des fibres de verre et que la résine est une résine du type époxy.

10. Tête de rotor de giravion selon la revendication 8, caractérisée en ce que les fibres à haute résistance mécanique sont des fibres aramides et que la résine est une résine époxy.

11. Tête de rotor de giravion selon l'une quelconque des revendications 6 à 10, caractérisée en ce que chacun des tirants (4) a une section de forme ellipsoïdale.

12. Tête de rotor de giravion selon l'une quelconque des revendications 8 à 11, caractérisée en ce que chacun des tirants (4) est obtenu par bobinage en écheveau de stratifils préimprégnés de résine synthétique sur une douille cylindrique (42), disposée à chacune de leurs extrémités, de manière à constituer l'attache (41) correspondante, ledit écheveau de stratifils préimprégnés étant ensuite polymérisé à chaud et sous tension dans un moule en forme.

13. Tête de rotor de giravion selon l'une des revendications 2 à 12, caractérisée en ce que les extrémités de deux tirants (4) voisins reliés au même manchon (3) sont solidarisées entre elles.

14. Tête de rotor de giravion selon la revendication 13, caractérisée en ce que les extrémités de deux tirants (4) voisins reliés au même manchon (3) sont disposées dans une structure stratifiée (43) afin d'être solidarisées entre elles.

15. Tête de rotor de giravion selon la revendication 14, caractérisée en ce que la structure stratifiée (43) comporte une coque (45)en tissus de fibres synthétiques, à haute résistance mécanique, enrobées dans de la résine synthétique et un remplissage en compound (47), le tout étant polymérisé à chaud et sous pression dans un moule en forme.

16. Tête de rotor de giravion selon la revendication 15, caractérisée en ce que chacun des manchons (3) vient coiffer les deux extrémités des tirants (4) correspondants qui sont elles-mêmes solidarisées dans la structure stratifiée (43), et dont les attaches (41) sont fixées dans ledit manchon (3) par les deux boulons (46) qui traversent des alésages (44) ménagés dans les deux douilles (42).

17. Tête de rotor de giravion selon l'une quelconque des revendications précédentes, caractérisée en ce que chacune des butées sphériques lamifiées (5) comporte une partie centrale (81), déformable en torsion, associée à une armature interne (82) et à une armature externe (83), l'armature interne (82) étant solidaire de l'extrémité interne du manchon (3) correspondant et l'armature externe (83) étant liée à la périphérie du corps de moyeu (1).

18. Tête de rotor de giravion selon la revendication 17, caractérisée en ce que la solidarisation de l'armature interne (82) de la butée sphérique lamifiée (5) avec l'extrémité interne du manchon (3) est réalisée par deux boulons (77) traversants dont les axes sont parallèles entre eux et parallèles à l'axe du rotor.

19. Tête de rotor de giravion selon la revendication 18, caractérisée en ce que l'armature interne (82) de chaque butée sphérique lamifiée (5) est montée dans une entretoise de liaison (70) qui est solidaire du manchon (3) correspondant par les deux boulons (77) de fixation, qui traversent les alésages (71) ménagés dans cette entretoise de liaison (70).

20. Tête de rotor de giravion selon la revendication 19, caractérisée en ce que l'armature interne (82) de chaque butée sphérique lamifiée (5) comporte un logement cylindrique axial (89) qui reçoit un tenon cylindrique (72) correspondant ménagé sur l'entretoise de liaison (70), l'axe du logement cylindrique axial (89) et du tenon (72) étant sensiblement parallèle à l'axe longitudinal du manchon (3) et de la pale (2) correspondante.

21. Tête de rotor de giravion selon l'une quelconque des revendications précédentes, caractérisée en ce que chacune des extrémités externes des manchons (3) est conformée en double chape et est reliée à la pale (2) correspondante par deux broches parallèles (92) dont l'axe est sensiblement parallèle à l'axe du rotor, broches (92) qui traversent des alésages (63, 64) ménagés dans la chape double d'extrémité du manchon (3) et dans des alésages (93) ménagés dans le pied de la pale (2).

22. Tête de rotor de giravion selon l'une quelconque des revendications précédentes, caractérisée en ce que chaque manchon (3) est constitué par un corps tubulaire allongé de section ovoïdale, dont l'axe longitudinal est sensiblement celui de la pale (2) correspondante, et dont l'extrémité extérieure est fermée par une paroi transversale mince de raidissement (55), et qui comporte dans ses parois interne (51) et externe (52), par rapport à la prise de mouvement, deux évidements (53, 54) situés en regard pour le passage de la butée sphérique lamifiée (5), ledit corps tubulaire comportant de plus :
- à son extrémité intérieure, une double chape entre les branches (73, 74) de laquelle vient se fixer l'entretoise de liaison (70), au moyen des deux boulons de fixation (77) qui traversent d'une part les alésages (71) ménagés dans l'entretoise de liaison (70) et d'autre part les alésages (67, 68) ménagés dans les branches (73, 74) de ladite double chape ;
- à son extrémité extérieure, au-delà de la paroi mince de raidissement (55), une chape double dans laquelle se monte le pied de la pale (2) correspondante, deux alésages (63, 64) étant ménagés dans chacune des branches (61) et (62) en regard et sensiblement parallèlement à l'axe du rotor, de façon à recevoir les deux broches (92) d'attache de pale ;
- dans sa partie intermédiaire centrale et près de la paroi transversale mince de raidissement (55), des alésages (65, 66) d'axes sensiblement parallèles à l'axe du rotor et destinés à recevoir les deux boulons (46) de fixation des attaches (41) des tirants (4) ;
- sur l'une (56) des parois longitudinales (56, 57) situées dans un plan perpendiculaire au plan du rotor, deux oreilles (69) disposées face à face et perpendiculairement à ladite paroi (56), de manière à constituer une chape pour recevoir l'attache (95) articulée de la bielle (96) de commande de pas de la pale (2) correspondante.

23. Tête de rotor de giravion selon l'une quelconque des revendications précédentes, caractérisée en ce que le corps de moyeu (1) est un cylindre creux disposé à l'extrémité de l'arbre rotor (6) et dans lequel sont logés les tirants (4) reliant les manchons (3) diamétralement opposés ainsi que les butées sphériques lamifiées (5), cylindre comportant des ouvertures radiales (7, 8) pour le passage des manchons (3), ledit corps de moyeu (1) étant réalisé en deux parties : une partie interne (9) et une partie externe (10), la partie interne étant raccordée à l'arbre rotor (6) par une zone évasée (22) en forme de tronc de cône, et la partie externe étant en forme de couvercle (10) qui est solidarisé avec la partie interne (9), d'une part au moyen de boulons (19) qui sont disposés dans des alésages (15, 17) aménagés sur des portions (11, 13) de collerettes situées sur le pourtour de la partie interne (9) et du couvercle (10) en forme de couronne, d'autre part au moyen de boulons (20) disposés dans des alésages (84) forés dans les armatures externes (83) des butées sphériques lamifiées (5), et dans des alésages (16, 18) aménagés en concordance sur des éléments (12, 14) de collerette situés sur le pourtour de la partie interne (9) et du couvercle (10), près de la zone centrale des évidements (53, 54) des manchons (3), les boulons (20) solidarisant ainsi les armatures externes (83) des butées sphériques lamifiées (5) sur la périphérie du corps de moyeu (1).

24. Tête de rotor de giravion selon la revendication 23, caractérisée en ce que chaque armature interne (82) de butée sphérique lamifiée (5) a une forme parallèlépipédique et est accolée, suivant un plan perpendiculaire à l'axe commun du manchon (3) et de la pale (2), à une entretoise de liaison (70) par un tenon cylindrique (72) engagé dans un logement cylindrique axial (89) ménagé dans ladite armature interne (82) solidaire de la partie centrale déformable (81) de la butée sphérique lamifiée (5), de sorte que ladite butée sphérique lamifiée (5) puisse se monter ou se démonter aisément par l'évidement externe (54), par rapport à la prise de mouvement , ménagé dans le manchon (3), après que les boulons (20) aient été retirés de leur logement et que le couvercle (10) du corps de moyeu (1) ait été démonté.

25. Tête de rotor arrière d'hélicoptère suivant l'une quelconque des revendications 1 à 24.

26. tête de rotor arrière d'hélicoptère suivant la revendication 25, caractérisée en ce que la commande du pas des pales (2) est réalisée par un plateau de commande (98) qui se déplace suivant l'axe du rotor et dont l'extrémité de chaque bras (97) est liée à la chape (69) du manchon (3) par une bielle à rotule (96).

## Claims

1. A rotorcraft rotor head having an even number of blades and comprising a hub body (1) on which the blades (2) are mounted in diametrically opposed pairs which are rotatable by means of articulations and in which for each pair of blades there is provided, between the feet of said blades, a connection which is rigid in traction but elastic in torsion and in flapping bending, this connection being without any link with the hub of the rotor, characterized in that :
- the articulation of each blade (2) on the hub body (1) is constituted by a single laminated spherical stop (5) comprising, between two rigid internal and external reinforcements, an alternate stacking of rigid spherical caps and of strips made of an elastic material, in the shape of a portion of a sphere, which spherical laminated stop on the one hand, is integral by its internal reinforcement with the internal end with respect to the rotor axis of a hollow sleeve (3), the other end of which is integral with the foot of the blade, said sleeve comprising laterally an introduction lever for controlling the pitch of the blade, and on the other hand, is integral by its external reinforcement with the periphery of the hollow hub body on which said stop bears ;
- the diametrically opposed sleeves are connected to each other by two identical tie rods (4), arranged parallel to the plane of the rotor and substantially spaced on either side of the common longitudinal axis of the two diametrically opposed blades, each end of said tie rods (4) comprising a bore whose axis is substantially parallel to the rotor axis for fixing it to the inside of the corresponding sleeve (3) by means of a bolt which passes through two bores in register formed in said sleeve (3) ;
- the planes of each group of two tie rods (4) are arranged parallel to each other with a slight offset along the rotor axis of sufficient value to allow the free deflection of the tie rods (4) during their bending and torsion in order to follow the flappings and the changes of pitch of the blades, this offset being obtained by a corresponding offset of the position parallel to the rotor axis, of the laminated spherical stops (5) corresponding to each group of two tie rods (4) on the hub body (1) ;
- the material of the tie rods (4) and the dimensions of their cross-section are chosen so that said tie rods are hardly deformable in traction along their longitudinal axis and are flexible in bending in the plane perpendicular to the plane of the rotor as well as in torsion along their own longitudinal axis ;
- the relative rigidities in traction of two tie rods (4) linking two diametrically opposed sleeves (3) and in compression of the two laminated spherical stops (5) arranged between the corresponding sleeves (3) and the hub body (1) are chosen in a pre-established ratio in such a way that the centrifugal force originating from each rotating blade (2) may be balanced out in proportion to these rigidities, on the one part on the diametrically opposite blade (2) thus loading the two tie rods (4) in traction, and for the remaining part, on the hub body via the corresponding laminated spherical stop (5), loaded in compression.

2. The rotorcraft rotor head according to claim 1, characterized in that the member fastening each tie rod (4) to each sleeve is arranged on the outside of the laminated spherical stop (5) with respect to the rotor axis, in such a way that the length of the two tie rods (4) is significantly greater than the distance between two diametrically opposed laminated spherical stops (5).

3. The rotorcraft rotor head according to one of claims 1 or 2, characterized in that each of the tie rods (4) is constituted by a bundle of stacked thin metallic strips, strips whose ends are shaped into an eyelet in order to receive the bolts (46) for linking onto the sleeves (3).

4. The rotorcraft rotor head according to claim 3, characterized in that the thin metallic strips situated on the outside of the bundle are of a smaller width than that of the internal strips, in such a way as to distribute between them the shear stresses due to their torsion.

5. The rotorcraft rotor head according to any one of claims 3 or 4, characterized in that the strips are covered with an antifriction plastic coating in order to avoid contact corrosion.

6. The rotorcraft rotor head according to claims 1 or 2, characterized in that each of the tie rods (4) is constituted by a skein winding of metal wires, of high mechanical strength, sheathed in a flexible material.

7. The rotorcraft rotor head according to claim 6, characterized in that the metal wires of high mechanical strength are made of steel and the flexible sheathing material is made of elastomer.

8. The rotorcraft rotor head according to claims 1 or 2, characterized in that each of the tie rods (4) is constituted by a skein winding of threads of mineral or synthetic fibers, of high mechanical strength, agglomerated by a synthetic resin which is heat polymerized.

9. The rotorcraft rotor head according to claim 8, characterized in that the fibers of high mechanical strength are glass fibers and in that the resin is a resin of the epoxy type.

10. The rotorcraft rotor head according to claim 8, characterized in that the fibers of high mechanical strength are aramid fibers and in that the resin is an epoxy resin.

11. The rotorcraft rotor head according to any one of claims 6 to 10, characterized in that each of the tie rods (4) has a cross-section of ellipsoidal shape.

12. The rotorcraft rotor head according to any one of claims 8 to 11, characterized in that each of the tie rods (4) is obtained by skein winding rovings which are preimpregnated with synthetic resin onto a cylindrical bush (42), arranged at each of their ends, so as to constitute the corresponding fastening member (41), said skein of preimpregnated rovings then being heat polymerized under tension in a shaped mold.

13. The rotorcraft rotor head according to one of claims 2 to 12, characterized in that the ends of two neighbouring tie rods (4) which are linked to the same sleeve (3) are integral with each other.

14. The rotorcraft rotor head according to claim 13, characterized in that the ends of two neighbouring tie rods (4) linked to the same sleeve (3) are arranged in a laminated structure (43) in order to be integral with each other.

15. The rotorcraft rotor head according to claim 14, characterized in that the laminated structure (43) comprises a shell (45) made of synthetic fiber fabrics, of high mechanical strength, sheathed in synthetic resin and a filling of compound (47), the whole assembly being heat polymerized under pressure in a shaped mold.

16. The rotorcraft rotor head according to claim 15, characterized in that each of the sleeves (3) caps the two ends of the corresponding tie rods (4) which themselves are integral in the laminated structure (43), and the fastening members (41) of which are fixed in said sleeve (3) by the two bolts (46) which pass through bores (44) formed in the two bushes (42).

17. The rotorcraft rotor head according to any one of the preceding claims, characterized in that each of the laminated spherical stops (5) comprises a central part (81), which can be deformed in torsion, associated with an internal reinforcement (82) and an external reinforcement (83), the internal reinforcement (82) being integral with the internal end of the corresponding sleeve (3) and the external reinforcement (83) being linked to the periphery of the hub body (1).

18. The rotorcraft rotor head according to claim 17, characterized in that the integral fixing of the internal reinforcement (82) of the laminated spherical stop (5) to the internal end of the sleeve (3) is provided by two through bolts (77) whose axes are parallel to each other and parallel to the rotor axis.

19. The rotorcraft rotor head according to claim 18, characterized in that the internal reinforcement (82) of each laminated spherical stop (5) is mounted in a linking brace (70) which is integral with the corresponding sleeve (3) by the two fixing bolts (77), which pass through the bores (71) formed in this linking brace (70).

20. The rotorcraft rotor head according to claim 19, characterized in that the internal reinforcement (82) of each laminated spherical stop (5) comprises an axial cylindrical housing (89) which receives a corresponding cylindrical tenon (72) formed on the linking brace (70), the axis of the axial cylindrical housing (89) and of the tenon (72) being substantially parallel to the longitudinal axis of the sleeve (3) and of the corresponding blade (2).

21. The rotorcraft rotor head according to any one of the preceding claims, characterized in that each of the external ends of the sleeves (3) is shaped into a double clevis and is linked to the corresponding blade (2) by two parallel spindles (92) whose axis is substantially parallel to the rotor axis, which spindles (92) pass through bores (63, 64) formed in the double clevis at the end of the sleeve (3) and through bores (93) formed in the foot of the blade (2).

22. The rotorcraft rotor head according to any one of the preceding claims, characterized in that each sleeve (3) is constituted by an elongated tubular body of oval cross-section, whose longitudinal axis is substantially that of the corresponding blade (2), and the outer end of which is closed by a thin stiffening transverse wall (55), and which comprises in its internal (51) and external (52) walls, with respect to the uptake of movement, two recesses (53, 54) located opposite each other for the passage of the laminated spherical stop (5), said tubular body comprising moreover :
- at its inner end, a double clevis between the branches (73, 74) of which the linking brace (70) is fixed, by means of the two fixing bolts (77) which pass through, on the one hand, the bores (71) formed in the linking brace (70) and, on the other hand, the bores (67, 68) formed in the branches (73, 74) of said double clevis ;
- at its outer end, beyond the thin stiffening wall (55), a double clevis in which the foot of the corresponding blade (2) is mounted, two bores (63, 64) being formed in each of the branches (61 and 62), opposite to each other and substantially parallel to the rotor axis, in such a way as to receive the two spindles (92) for fastening the blade ;
- in its intermediate central part and near to the thin transverse stiffening wall (55), bores (65, 66) having axes substantially parallel to the rotor axis and designed to receive the two bolts (46) for fixing the fastening members (41) of the tie rods (4).
- on one (56) of the longitudinal walls (56, 57) located in a plane perpendicular to the plane of the rotor, two lugs (69) arranged face to face and perpendicular to said wall (56), in such a manner as to constitute a clevis to receive the articulated fastening member (95) of the corresponding blade (2) pitch control connecting rod (96).

23. The rotorcraft rotor head according to any one of the preceding claims, characterized in that the hub body (1) is a hollow cylinder arranged at the end of the rotor shaft (6) and in which are housed the tie rods (4) linking the diametrically opposed sleeves (3) as well as the laminated spherical stops (5), said cylinder comprising radial openings (7, 8) for the passage of the sleeves (3), said hub body (1) being made in two parts : one internal part (9) and one external part (10), the internal part being connected to the rotor shaft (6) by a flared zone (22) in the shape of a conical frustum, and the external part being in the shape of a cover (10) which is integral with the internal part (9), on the one hand, by means of bolts (19) which are arranged in bores (15, 17) made on portions (11, 13) of flanges located on the perimeter of the internal part (9) and of the cover (10) in the shape of a crown, and on the other hand, by means of bolts (20) arranged in bores (84) drilled in the external reinforcements (83) of the laminated spherical stops (5), and in bores (16, 18) made in alignment on flange elements (12, 14) located on the perimeter of the internal part (9) and of the cover (10), near to the central zone of the recesses (53, 54) of the sleeves (3), the bolts (20) thus integrally fixing the external reinforcements (83) of the laminated spherical stops (5) on the periphery of the hub body (1).

24. The rotorcraft rotor head according to claim 23, characterized in that each internal reinforcement (82) of the laminated spherical stop (5) has a parallelepipedal shape and is attached, along a plane perpendicular to the common axis of the sleeve (3) and the blade (2), to a linking brace (70) by a cylindrical tenon (72) inserted in an axial cylindrical housing (89) formed in said internal reinforcement (82) which is integral with the deformable central part (81) of the laminated spherical stop (5), in such a way that said laminated spherical stop (5) may be mounted or dismantled easily through the external recess (54), with respect to the uptake of movement, formed in the sleeve (3), after the bolts (20) have been removed from their housing and the cover (10) of the hub body (1) has been dismantled.

25. A rear rotor head of a helicopter according to any one of claims 1 to 24.

26. The rear rotor head of a helicopter according to claim 25, characterized in that the pitch control of the blades (2) is produced by a control plate (98) which moves along the rotor axis and the end of each arm (97) of which is linked to the clevis (69) of the sleeve (3) by a swivel-ended connecting rod (96).

## Patentansprüche

1. Rotorkopf eines Drehflügelflugzeugs, der eine gerade Anzahl an Rotorblättern aufweist und einen Nabenkörper (1) umfaßt, an dem die Rotorblätter (2) paarweise und diametral gegenüberliegend mittels Gelenken drehbeweglich angebracht sind, und bei dem für jedes Paar von Rotorblättern eine Verbindung zwischen den Füßen dieser Rotorblätter vorgesehen ist, die hinsichtlich mechanischem Zug starr, jedoch hinsichtlich Torsion und der bei Schlagbewegungen auftretenden Durchbiegungen elastisch ist, wobei diese Verbindung ohne jegliche Verbindung zur Rotornabe ist dadurch gekennzeichnet, daß:
- das Gelenk jedes Rotorblatts (2) an dem Nabenkörper (1) von einem einzigen, lamellaren, runden Axiallager (5) gebildet ist, das zwischen zwei starren Beschlägen, einem inneren und einem äußeren, einen die Form eines Kugelabschnitts aufweisenden, alternierenden Stapel von starren Kugelkappen und Lamellen aus elastischem Material umfaßt, welches runde, lamellare Axiallager einerseits mit seinem inneren Beschlag an dem - bezogen auf die Rotorachse - inneren Ende einer hohlen Hülse (3) befestigt ist, deren anderes Ende an dem Fuß des Rotorblatts befestigt ist, wobei die genannte Hülse seitlich einen Hebel zur Steuerung der Steigung des Rotorblatts aufweist, und andererseits mit seinem äußeren Beschlag am Umfang des hohlen Nabenkörpers befestigt ist, gegen den sich dieses Axiallager abstützt;
- die sich diametral gegenüberliegenden Hülsen untereinander durch zwei identische Zugstreben (4) verbunden sind, die parallel zur Ebene des Rotors angeordnet sind und im wesentlichen auf beiden Seiten von der gemeinsamen Längsachse der beiden sich diametral gegenüberliegenden Rotorblättern beabstandet sind, wobei jedes Ende dieser Zugstreben (4) eine im wesentlichen zur Rotorachse parallele Bohrung für seine Befestigung im Inneren der entsprechenden Hülse (3) mittels eines Bolzens aufweist, der zwei entsprechende, in der Hülse (3) vorgesehene Bohrungen durchläuft;
- die Ebenen jeder Gruppe aus zwei Zugstreben (4) parallel zueinander angeordnet sind, mit einer leichten Verschiebung entlang der Rotorachse, die genügend groß ist, um die freie Federung der Zugstreben (4) bei ihrer Durchbiegung und ihrer Torsion zu ermöglichen, um den Sclagbewegungen und den Veränderungen der Rotorblattsteigung zu folgen, wobei diese Verschiebung durch eine entsprechende, zur Rotorachse parallele Verschiebung der Position der jeder Gruppe aus zwei Zugstreben (4) entsprechenden, lamellaren, runden Axiallager (5) an dem Nabenkörper (1) erreicht wird;
- das Material der Zugstreben (4) und die Dimensionierung ihres Querschnitts so gewählt sind, daß diese Zugstreben durch mechanischen Zug entlang ihrer Längsachse wenig verformbar sind und in der zur Rotorebene senkrechten Ebene biegeelastisch sowie entlang ihrer eigenen Längsachse torsionselastisch sind;
- die relativen Steifigkeiten, die Zugsteifigkeit von zwei Zugstreben (4), welche zwei sich diametral gegenüberliegende Hülsen (3) verbinden, und die Drucksteifigkeit der zwei lamellaren, runden Axiallager (5), die zwischen den entsprechenden Hülsen (3) und dem Nabenkörper (1) angeordnet sind, in einem vorher festgelegten Verhältnis derart gewählt sind, daß sich die von jedem rotierenden Rotorblatt (2) herrührende Zentrifugalkraft nach Maßgabe dieser Steifigkeiten, zu einem Teil an dem diametral gegenüberliegenden Rotorblatt (2) aufheben kann, wobei also die zwei Zugstreben (4) mit Zug belastet werden, und zum übrigen Teil an dem Nabenkörper durch das entsprechende, lamellare, runde Axiallager (5), das mit Druck belastet wird.

2. Rotorkopf eines Drehflügelflugzeugs nach Anspruch 1, dadurch gekennzeichnet, daß die Befestigung jeder Zugstrebe (4) an jeder Hülse, bezogen auf die Achse des Rotors, außerhalb des lamellaren, runden Axiallagers (5) angeordnet ist, und zwar derart, daß die Länge der beiden Zugstreben (4) deutlich größer ist als der Abstand zwischen zwei sich diametral gegenüberliegenden, lamellaren, runden Axiallagern (5).

3. Rotorkopf eines Drehflügelflugzeugs nach einem der Ansprüche 1 oder 2, dadurch gekennzeichnet, daß jede der Zugstreben (4) aus einem Bündel geschichteter, dünner Metallstreifen gebildet ist, Streifen, deren Enden als Öse geformt sind, um die Bolzen (46) zur Verbindung mit den Hülsen (3) aufzunehmen.

4. Rotorkopf eines Drehflügelflugzeugs nach Anspruch 3, dadurch gekennzeichnet, daß die dünnen Metallstreifen, die sich an der Außenseitendes Bündels befinden, eine geringere Breite besitzen als die inneren Streifen, so daß die auf ihre Torsion zurückführenden Scherspannungen zwischen ihnen verteilt werden.

5. Rotorkopf eines Drehflügelflugzeugs nach einem der Ansprüche 3 oder 4, dadurch gekennzeichnet, daß die Streifen mit einem reibsicheren Kunststoffmantel überzogen sind, um Kontaktkorrosionen zu verhindern.

6. Rotorkopf eines Drehflügelflugzeugs nach Anspruch 1 oder 2, dadurch gekennzeichnet, daß jede der Zugstreben (4) von einer Strangwicklung aus Metalldrähten von hoher mechanischer Festigkeit gebildet ist, die in einem flexiblen Material eingebettet sind.

7. Rotorkopf eines Drehflügelflugzeugs nach Anspruch 6, dadurch gekennzeichnet, daß die Metalldrähte von hoher mechanischer Festigkeit aus Stahl bestehen und das flexible Einbettungsmaterial aus Elastomer besteht.

8. Rotorkopf eines Drehflügelflugzeugs nach Anspruch 1 oder 2, dadurch gekennzeichnet, daß jede der Zugstreben (4) von einer Strangwicklung aus Mineralfaser- oder Kunstfaserfaden von hoher mechanischer Festigkeit gebildet ist die durch ein wärmepolymerisiertes Kunstharz verbunden sind.

9. Rotorkopf eines Drehflügelflugzeugs nach Anspruch 8, dadurch gekennzeichnet, daß die Fasern von hoher mechanischer Festigkeit Glasfasern sind und daß das Harz ein Harz von Epoxytyp ist.

10. Rotorkopf eines Drehflügelflugzeugs nach Anspruch 8, dadurch gekennzeichnet, daß die Fasern von hoher mechanischer Festigkeit Aramidfasern sind und daß das Harz ein Epoxyharz ist.

11. Rotorkopf eines Drehflügelflugzeugs nach einem der Ansprüche 6 bis 10, dadurch gekennzeichnet, daß jede der Zugstreben (4) einen ellipsoidischen Querschnitt hat.

12. Rotorkopf eines Drehflügelflugzeugs nach einem der Ansprüche 8 bis 11, dadurch gekennzeichnet, daß jede der Zugstreben (4) durch Strangwicklung von mit Kunstharz vorimprägnierten Rovings auf einer zylindrischen Hülse (42) erhalten ist die an jedem ihrer Enden gehaltert ist, um die entsprechende Befestigung (41) zu bilden, wobei der Strang aus vorimprägnierten Rovings anschließend in einer Lehrenform in Wärme und unter Druck polymerisiert ist.

13. Rotorkopf eines Drehflügelflugzeugs nach einem der Ansprüche 2 bis 12, dadurch gekennzeichnet, daß die Enden zweier benachbarter Zugstreben (4), die mit derselben Hülse (3) verbunden sind, untereinander fest verbunden sind.

14. Rotorkopf eines Drehflügelflugzeugs nach Anspruch 13, dadurch gekennzeichnet, daß die Enden zweier benachbarter Zugstreben (4), die mit derselben Hülse (3) verbunden sind, in einer Schichtstoffstruktur (43) angeordnet sind, um untereinander fest verbunden zu sein.

15. Rotorkopf eines Drehflügelflugzeugs nach Anspruch 14, dadurch gekennzeichnet, daß die Schichtstoffstruktur (43) eine Schale (45) aus Kunstfasergewebe, dessen Kunstfasern eine hohe mechanische Festigkeit aufweisen und in Kunstharz eingebettet sind, und eine Füllung aus Vergußmasse (47) umfaßt, wobei das Ganze in Warme und unter Druck in einer Lehrenform polymerisiert ist.

16. Rotorkopf eines Drehflügelflugzeugs nach Anspruch 15, dadurch gekennzeichnet, daß jede der Hülsen (3) die beiden Enden der entsprechenden Zugstreben (4) bedeckt, die ihrerseits in der Schichtstoffstruktur (43) fest miteinander verbunden sind und deren Befestigungen (41) durch die beiden Bolzen (46), welche in den zwei Hülsen (42) vorgesehene Bohrungen (44) durchlaufen, in der genannten Hülse (3) festgemacht sind.

17. Rotorkopf eines Drehflügelflugzeugs nach einem der vorhergehenden Ansprüche, dadurch gekennzeichnet, daß jedes der lamellaren, runden Axiallager (5) einen mittleren Teil (81) aufweist, der torsionsverformbar ist und mit einem inneren Beschlag (82) und einem äußeren Beschlag (83) zugeordnet ist, wobei der innere Beschlag (82) fest mit dem inneren Ende der entsprechenden Hülse (3) verbunden und der äußere Beschlag (83) an dem Umfang des Nabenkörpers (1) gebunden ist.

18. Rotorkopf eines Drehflügelflugzeugs nach Anpruch 17, dadurch gekennzeichnet, daß die feste Verbindung des inneren Beschlags (82) des lamellaren, runden Axiallagers (5) mit dem inneren Ende der Hülse (3) durch zwei durchlaufende Bolzen (77) verwirklicht ist, deren Achsen untereinander parallel und parallel zur Achse des Rotors verlaufen.

19. Rotorkopf eines Drehflügelflugzeugs nach Anspruch 18, dadurch gekennzeichnet, daß der innere Beschlag (82) jedes lamellaren, runden Axiallagers (5) in einem Verbindungssteg (70) montiert ist, der fest mit der entsprechenden Hülse (3) durch die beiden Befestigungsbolzen (77) verbunden ist, welche die in diesem Verbindungssteg (70) vorgesehenen Bohrungen (71) durchlaufen.

20. Rotorkopf eines Drehflügelflugzeugs nach Anspruch 19, dadurch gekennzeichnet, daß der innere Beschlag (82) jedes lamellaren runden Axiallagers (5) eine axiale zylindrische Aussparung (89) aufweist, welche einen entsprechenden zylindrischen Zapfen (72) aufnimmt, der an dem Verbindungssteg (70) vorgesehen ist, und daß die Achse der axialen zylindrischen Aussparung (89) und des Zapfens (72) im wesentlichen parallel zur Längsachse der Hülse (3) und des entsprechenden Rotorblatts (2) verläuft.

21. Rotorkopf eines Drehflügelflugzeugs nach einem der vorhergehenden Ansprüche, dadurch gekennzeichnet, daß jedes der äußeren Enden der Hülsen (3) in Form einer Doppelgabel ausgebildet und mit dem entsprechenden Rotorblatt (2) durch zwei parallele Stifte (92) verbunden ist, deren Achse im wesentlichen parallel zur Achse des Rotors verläuft, Stifte (92), die durch Bohrungen (63, 64) verlaufen, die in der Doppelgabel am Ende der Hülse (3) vorgesehen sind, und durch Bohrungen (93), die in dem Fuß des Rotorblatts (2) vorgesehen sind.

22. Rotorkopf eines Drehflügelflugzeugs nach einem der vorhergehenden Ansprüche, dadurch gekennzeichnet, daß jede Hülse (3) aus einem länglichen rohrförmigen Körper von annähernd eiförmigem Querschnitt besteht, dessen Längsachse im wesentlichen die des entsprechenden Rotorblatts (2) ist und dessen äußeres Ende von einer dünnen, querverlaufenden Aussteifungswand (55) geschlossen ist, und der in seiner Innenwand (51) und seiner Außenwand (52), bezogen auf den Abtrieb, zwei gegenüberliegende Aussparungen (53, 54) für den Durchtritt des lamellaren runden Axiallagers (5) aufweist, und daß dieser rohrförmige Körper außerdem umfaßt:
- an seinem inneren Ende, eine Doppelgabel, zwischen deren Armen (73, 74) der Verbindungssteg (70) mittels beider Befestigungsbolzen (77) befestigt ist, die einerseits die in dem Verbindungssteg (70) vorgesehenen Bohrungen (71) und andererseits die in den Armen (73, 74) der Doppelgabel vorgesehenen Bohrungen (67, 68) durchlaufen;
- an seinem äußeren Ende, jenseits der dünnen Aussteifungswand (55), eine Doppelgabel, in welcher der Fuß des entsprechenden Rotorblatts (2) montiert ist, wobei in jede der Arme (61) und (62) zwei Bohrungen (63, 64) vorgesehen sind, die einander gegenüberliegen und im wesentlichen parallel zur Achse des Rotors sind, um die beiden Rotorblatt-Befestigungsstifte (92) aufzunehmen;
- in seine mittleren Zwischenteil und nahe der dünnen, querverlaufenden Aussteifungswand (55), Bohrungen (65, 66) mit einer Achse, die im wesentlichen parallel zur Achse des Rotors verläuft, dazu bestimmt, die beiden Befestigungsbolzen (46) für die Befestigungen (41) der Zugstreben (4) aufzunehmen;
- an einer (56) der Längswunde (56, 57), die in einer Ebene senkrecht zur Ebene des Rotors verlaufen, zwei Ohren (69), die gegenüberliegend und senkrecht zu dieser Wand (56) angeordnet sind, so daß sie eine Gabel zur Aufnahme der angelenkten Befestigung (95) der Steuerstange (96) für die Steuerung der Steigung des entsprechenden Rotorblatts (2) bilden.

23. Rotorkopf eines Drehflügelflugzeugs nach einem der vorhergehenden Ansprüche, dadurch gekennzeichnet, daß der Nabenkörper (1) ein Hohlzylinder ist, der am Ende der Rotorwelle (6) angeordnet ist und in dem die Zugstreben (4), welche die diametral gegenüberliegenden Hülsen (3) verbinden, sowie die lamellaren, runden Axiallager (5) untergebracht sind, und dass der Zylinder radiale Öffnungen (7, 8) für den Durchtritt der Hülsen (3) aufweist, daß der Nabenkörper (1) in zwei Teilen ausgeführt ist: einem inneren Teil (9) und einem äußeren Teil (10), wobei der innere Teil durch eine kegelstumpfförmige, erweiterte Zone (22) mit der Rotorwelle (6) angeschlossen ist und der äußere Teil in Form eines Deckels (10) ausgebildet ist, der mit dem inneren Teil (9) einerseits mittels Bolzen (19), die in Bohrungen (15, 17) angeordnet sind, welche auf flanschförmigen Abschnitten (11, 13) vorgesehen sind, die kranzförmig am äußeren Umfang des inneren Teils (9) und des Deckels (10) angeordnet sind, und andererseits mittels Bolzen (20) fest verbunden ist, die in Bohrungen (84), welche in die äußeren Beschläge (83) der lamellaren, runden Axiallager (5) gebohrt sind, und in Bohrungen (16, 18), die in entsprechender Weise auf Flanschelementen (12, 14) am äußeren Umfang des inneren Teils (9) und des Deckels (10) vorgesehen sind, nahe der mittleren Zone der Aussparungen (53, 54) der Hülsen (3) angeordnet sind, Wodurch die Bolzen (20) die äußeren Beschlage (83) der lamellaren, runden Axiallager (5) am Umfang des Nabenkörpers (1) befestigen.

24. Rotorkopf eines Drehflügelflugzeugs nach Anspruch 23, dadurch gekennzeichnet, daß jeder innere Beschlag (82) des lamellaren, runden Axiallagers (5) eine parallelepipedische Form besitzt und längs einer Ebene, die senkrecht zur gemeinsamen Achse der Hülse (3) und des Rotorblätts (2) verläuft, an einen Verbindungssteg (70) mittels eines zylindrischen Zapfens (72) angefügt ist, der in eine axiale zylindrische Anssparung (89) eingreift, die in dem inneren Beschlag (82) vorgesehen ist, welcher mit dem verformbaren mittleren Teil (81) des lamellaren, runden Axiallagers (5) fest verbunden ist, so daß dieses lamellare, runde Axiallager (5) leicht durch die - bezogen auf den Abtrieb - äußere, in die Hülse (3) vorgesehene Aussparung (54) montiert oder demontiert werden kann, nachdem die Bolzen (20) aus ihrem Sitz herausgezogen worden sind und der Deckel (10) des Nabenkörpers (1) abmontiert worden ist.

25. Heckrotorkopf eines Helikopters, ausgebildet nach einem der Ansprüche 1 bis 24.

26. Heckrotorkopf eines Helikopters nach Anspruch 25, dadurch gekennzeichnet, daß die Steuerung der Steigung der Rotorblätter (2) durch eine Steuerscheibe (98) erfolgt, die sich entlang der Achse des Rotors verschiebt und von der das Ende jedes Arms (97) durch eine Stange mit Kugelgelenk (96) mit der Gabel (69) der Hülse (3) verbunden ist.
